(19) **Europäisches Patentamt / European Patent Office / Office européen des brevets**

(11) **EP 4 738 317 A1**

(12) # EUROPEAN PATENT APPLICATION

(43) Date of publication:
06.05.2026 Bulletin 2026/19

(21) Application number: 25211553.0

(22) Date of filing: 28.10.2025

(51) International Patent Classification (IPC):
*G09B 19/00* (2006.01)    *B62J 45/422* (2020.01)
*B62K 21/12* (2006.01)

(52) Cooperative Patent Classification (CPC):
**G09B 19/0038; B62J 45/422; B62J 50/22;**
A63B 2024/0068; B62K 21/12

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 30.10.2024 US 202463713652 P
14.10.2025 US 202519358352

(71) Applicant: **Giant Manufacturing Co., Ltd.
Taichung 40763 (TW)**

(72) Inventors:
• **LO, Chi-Wei
Taichung, 407 (TW)**
• **CHANG, Chih-Kai
Taichung, 407 (TW)**

(74) Representative: **Finnegan Europe LLP
1 London Bridge
London SE1 9BG (GB)**

(54) **SYSTEM, METHOD, AND COMPUTER-READABLE MEDIUM FOR EVALUATING CYCLING ACTIVITIES**

(57)     A system for evaluating cycling activities, including a memory storing a set of instructions; and one or more processors configured to execute the stored set of instructions to perform operations comprising: receiving riding data (1310), associated with a user riding a bicycle, from a plurality of sensors; processing the riding data to obtain data in a first domain (1320); comparing (1330) the data in the first domain to baseline information to evaluate a riding status of the user or a riding condition of a riding path; converting (1340) the data in the first domain to obtain data in a second domain; and evaluating (1350) the riding status of the user or the riding condition of the riding path according to the data in the second domain.

1300

Receiving riding data, associated with a user riding a bicycle, from a plurality of sensors — 1310

Processing the riding data to obtain data in a first domain — 1320

Comparing the data in the first domain to baseline information to evaluate a riding status of the user or a riding condition of a riding path — 1330

Converting the data in the first domain to obtain data in a second domain — 1340

Evaluating the riding status of the user or the riding condition of the riding path according to the data in the second domain — 1350

**FIG. 13**

EP 4 738 317 A1

**Description**

## RELATED APPLICATIONS

This application claims priority to and the benefits of U.S. Provisional Application No. 63/713,652 filed on October 30, 2024 and U.S. Non-provisional Application No. 19/358,352, filed on October 14, 2025.

## TECHNICAL FIELD

The disclosure relates to a system, method, and computer-readable medium for evaluating cycling activities.

## BACKGROUND

Cycling is popular for its diverse roles, including transportation, commuting, exercise, wellness, fitness, and training. Sensors are commonly used to measure pedaling power and pedaling revolutions per minute (RPM). However, evaluating cycling activities using a single sensor remains a challenge.

## SUMMARY

In some embodiments, a system for evaluating cycling activities includes: a memory storing a set of instructions; and one or more processors configured to execute the stored set of instructions to perform operations including: receiving riding data, associated with a user riding a bicycle, from a plurality of sensors; processing the riding data to obtain data in a first domain; comparing the data in the first domain to baseline information to evaluate a riding status of the user or a riding condition of a riding path; converting the data in the first domain to obtain data in a second domain; and evaluating the riding status of the user or the riding condition of the riding path according to the data in the second domain.

In some embodiments, a method for evaluating cycling activities includes: receiving, by one or more processors, riding data, associated with a user riding a bicycle, from a plurality of sensors; processing, by the one or more processors, the riding data to obtain data in a first domain; comparing, by the one or more processors, the data in the first domain to baseline information to evaluate a riding status of the user or a riding condition of a riding path; converting, by the one or more processors, the data in the first domain to data in a second domain; and evaluating, by the one or more processors, the riding status of the user or the riding condition of the riding path according to the data in the second domain.

In some embodiments, a non-transitory computer-readable medium storing instructions that are executable by one or more processors to cause the one or more processors to perform operations including : receiving riding data, associated with a user riding a bicycle, from a plurality of sensors; processing the riding data to obtain data in a first domain; comparing the data in the first domain to baseline information to evaluate a riding status of the user or a riding condition of a riding path; converting the data in the first domain to data in a second domain; and evaluating the riding status of the user or the riding condition of the riding path according to the data in the second domain.

In some embodiments, a bicycle including: a right handlebar including one or more first sensors configured to detect a first force signal during a riding period of a user riding the bicycle on a riding path; a left handlebar including one or more second sensors configured to detect a second force signal during the riding period; and one or more processors configured to execute a set of instructions stored in a memory to perform operations including: processing the first force signal and the second force signal to obtain data in a first domain and data in a second domain, wherein the data in the first domain is associated with the user riding the bicycle during the riding period; generating baseline information according to a plurality of indoor cycling activities; comparing the data in the first domain to the baseline information to evaluate a riding status of the user or a riding condition of the riding path; and converting the data in the first domain to the data in the second domain for evaluating the riding status of the user, the riding condition of the riding path, or a combination thereof.

In some embodiments, a remote computing device including: a memory storing a set of instructions; and one or more processors configured to execute the stored set of instructions to perform operations including: receiving a first force signal and a second force signal from a bicycle; processing the first force signal and the second force signal to obtain data in a first domain and data in a second domain, wherein the data in the first domain is associated with a user riding the bicycle during a riding period; comparing the data in the first domain to baseline information to evaluate a riding status of the user or a riding condition of a riding path, wherein the baseline information is generated according to a plurality of indoor cycling activities; and converting the data in the first domain to the data in the second domain for evaluating the riding status of the user, the riding condition of the riding path, or a combination thereof.

## BRIEF DESCRIPTION OF THE DRAWINGS

Aspects of the present disclosure are best understood from the following detailed description when read with the accompanying figures. The accompanying drawings, which are incorporated in and constitute a part of this specification, illustrate several exemplary embodiments and, together with the corresponding descriptions, provide examples for explaining the disclosed embodiments consistent with the present disclosure and related principles. It is noted that, in accordance with the standard practice in the industry, various features are not drawn to scale. In fact, the dimensions of the various features may be arbitrarily increased or reduced for clarity of discussion.

FIG. 1 is a schematic diagram illustrating an example system for evaluating cycling activities, according to some embodiments of the present disclosure.

FIG. 2 is a schematic diagram illustrating example sensors of the system of FIG. 1, according to some embodiments of the present disclosure.

FIG. 3 is a schematic diagram illustrating an example processing device of the system of FIG. 1, according to some embodiments of the present disclosure.

FIG. 4 is a schematic diagram illustrating an example display device of the system of FIG. 1, according to some embodiments of the present disclosure.

FIG. 5 is a flowchart illustrating an example method performed by the system of FIG. 1, according to some embodiments of the present disclosure.

FIG. 6 is a flowchart illustrating an example method performed by the system of FIG. 1, according to some embodiments of the present disclosure.

FIG. 7 is a flowchart illustrating an example method performed by the system of FIG. 1, according to some embodiments of the present disclosure.

FIG. 8A is a schematic diagram illustrating an example configuration of a baseline of cycling activities in indoor cycling scenarios to the system of FIG. 1, according to some embodiments of the present disclosure.

FIG. 8B is a schematic diagram illustrating example results of simulations, according to some embodiments of the present disclosure.

FIG. 9A is a schematic diagram illustrating example riding data in time domain obtained by the system of FIG. 1, according to some embodiments of the present disclosure.

FIG. 9B is a schematic diagram illustrating example signal processing of riding data in time domain performed by the system of FIG. 1, according to some embodiments of the present disclosure.

FIGs. 9C and 9D are schematic diagrams illustrating examples of signal processing of riding data in time domain performed by the system of FIG. 1, according to some embodiments of the present disclosure.

FIG. 10A is a schematic diagram illustrating example riding data in time domain obtained by the system of FIG. 1, according to some embodiments of the present disclosure.

FIG. 10B is a schematic diagram illustrating an example histogram of statistical results of processed data illustrated in FIG. 10A, according to some embodiments of the present disclosure.

FIG. 10C is a schematic diagram illustrating example riding data in the time domain, according to some embodiments of the present disclosure.

FIG. 10D is a schematic diagram illustrating an example histogram of statistical results of processed data illustrated in FIG. 10C, according to some embodiments of the present disclosure.

FIG. 11 is a flowchart illustrating an example method performed by the system of FIG. 1, according to some embodiments of the present disclosure.

FIGs. 12A-12E are schematic diagrams illustrating example vertical force data and differences therebetween obtained by the system of FIG. 1, according to some embodiments of the present disclosure.

FIG. 13 is a flowchart illustrating an example method performed by the system of FIG. 1, according to some embodiments of the present disclosure.

FIG. 14 is a flowchart illustrating an example method performed by the system of FIG. 1, according to some embodiments of the present disclosure.

FIG. 15A is a schematic diagram illustrating example cadence data during a time period obtained by the system of FIG. 1, according to some embodiments of the present disclosure.

FIG. 15B is a schematic diagram illustrating example vertical force data during a time period obtained by the system of FIG. 1, according to some embodiments of the present disclosure.

FIG. 15C is a schematic diagram illustrating example frequency-domain vertical force data converted by the exemplary system of FIG. 1, according to some embodiments of the present disclosure.

FIG. 16 is a flowchart illustrating an example method performed by the exemplary system of FIG. 1, according to some embodiments of the present disclosure.

FIG. 17A is a schematic diagram illustrating an example route of an outdoor cycling scenario, according to some embodiments of the present disclosure.

FIGs. 17B-17C are schematic diagrams illustrating example riding data of two riders in time domain obtained by the system of FIG. 1, according to some embodiments of the present disclosure.

FIGs. 18A-18F are schematic diagrams illustrating example comparisons of riding data of two riders across frequency domain, time-frequency domain, and RS domain, performed by the system of FIG. 1, according to some embodiments of the present disclosure.

## DETAILED DESCRIPTION

Reference will now be made in detail to embodiments, examples of which are illustrated in the accompanying drawings and disclosed herein. The implementations set forth in the following description of embodiments are examples of systems, methods, and computer-readable media consistent with the aspects related to the disclosure and do not limit the scope of the present disclosure.

The following disclosure provides many different embodiments, or examples, for implementing different features of the provided subject matter. Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed.

The terms used in this specification generally have their ordinary meanings in the art and in the specific context where each term is used. The use of examples in this specification, including examples of any terms discussed herein, is illustrative only, and in no way limits the scope and meaning of the disclosure or of any exemplified term. Likewise, the present disclosure is not limited to various embodiments given in this specification.

Although the terms "first," "second," etc., may be used herein to describe various elements, these elements should not be limited by these terms. These terms are used to distinguish one element from another. For example, a first element could be termed a second element, and, similarly, a second element could be termed a first element, without departing from the scope of the embodiments. As used herein, the term "and/or" includes any and all combinations of one or more of the associated listed items.

Further, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

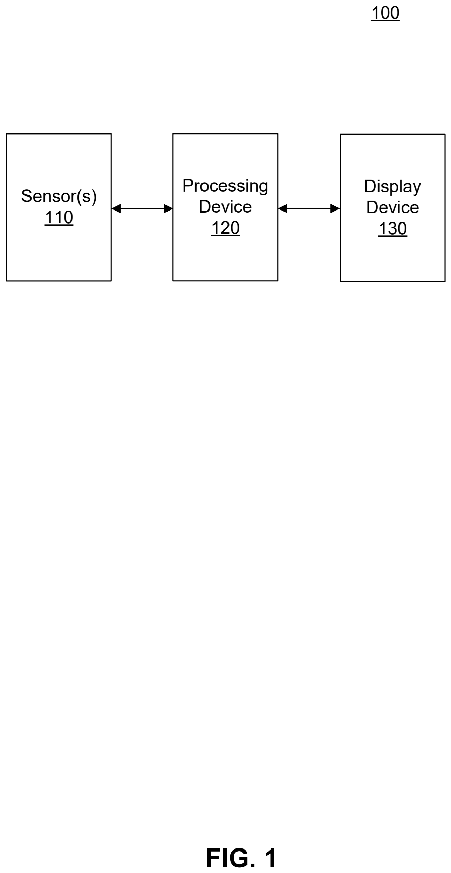

FIG. 1 is a schematic diagram illustrating an example system 100 for evaluating cycling activities, according to some embodiments of the present disclosure. As shown in FIG. 1, the system 100 includes one or more sensors 110, a processing device 120, and a display device 130. In some embodiments, the one or more sensors 110 are configured to detect and transmit cycle riding data (e.g., signals) to the processing device 120. The processing device 120 is configured to process the riding data and generate an evaluation result of cycling activities to be displayed on the display device 130. During an outdoor cycling activity of a user riding a bicycle, handlebars with the sensors 110 located on the bicycle are configured to obtain (e.g., sense, measure, or detect) the riding data. The handlebars with the sensors 110 are configured to transmit (e.g., upload) the riding data to the processing device 120 for processing. In some embodiments, the one or more sensors 110 include a gauge, a strain gauge, a pressure sensor, a grip sensor, or any sensor capable of (e.g., intermittently or continuously) sensing forces applied, pressed, or exerted by the user.

In some embodiments, the processing device 120 is configured to evaluate a riding status of the user or a riding condition of a riding path and generate an evaluation result. In some embodiments, the processing device 120 can be a remote computing resource or unit, which may include a cloud or edge computing unit. In some embodiments, the processing device 120 can be located on a bicycle, and includes one or more processors. In some embodiments, the display device 130 is configured to display the evaluation result, including, for example, the riding status of the user or the riding condition of the riding path. In some embodiments, the display device 130 may include a bicycle or cycling computer display, a mobile display, a computer display, or any device capable of displaying the evaluation result associated with the user.

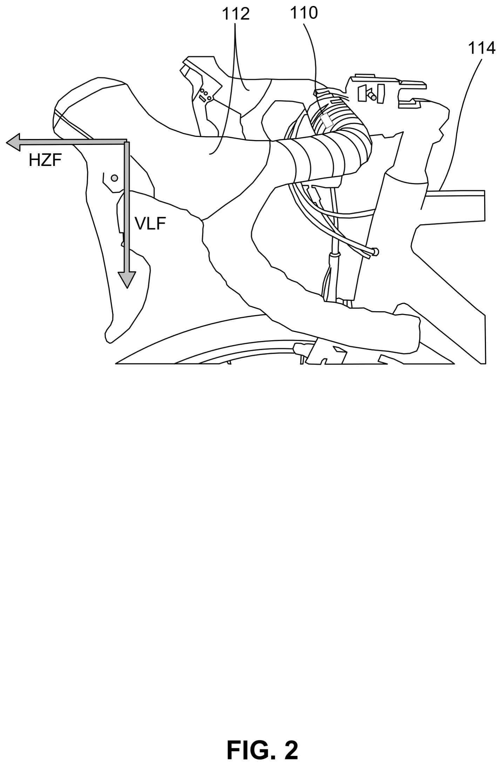

FIG. 2 is a schematic diagram illustrating an example of the sensors 110 of the system 100 of FIG. 1, according to some embodiments of the present disclosure. As shown in FIG. 2, a bicycle 114 includes handlebars 112, and a plurality of the sensors 110 (of which one is shown) arranged on the handlebars 112 are configured to obtain (e.g., sense, measure, or detect) riding data, and transmit the riding data to the processing device 120 for processing. The processing device 120 is configured to process the riding data to obtain a vertical force VLF with respect to the ground surface, a horizontal force HZF with respect to the ground surface, and a resultant force. In some embodiments, the processing device 120 processing the cycle riding data may perform operations including data sampling, calculating the vertical force VLF, calculating the horizontal force HZF, calculating the resultant force, or any combination thereof. For example, the data sampling rate may be 50 Hz, but the present disclosure is not limited thereto. In some embodiments, a force-sensing precision may be approximately within a range of $\pm 0.5$ kilograms (kg).

In some embodiments, setting the sensors 110 includes locating or attaching the sensors 110 on the handlebars 112. In such embodiments, a number of (e.g., four) sensors 110 configured to obtain (e.g., sensing, measuring, or detecting) the riding data may be attached to one of the handlebars 112 (e.g., a left handlebar), and a number of (e.g., four) sensors 110 configured to obtain the riding data may be attached to another one of the handlebars 112 (e.g., a right handlebar). In some embodiments, the sensors 110 may include two horizontal strain gauges and two vertical strain gauges attached to each of the left and right handlebars. In some embodiments, one of the two vertical strain gauges can be compressed while the other one of the two vertical strain gauges can be extended during deformation of the vertical strain gauges. The two vertical strain gauges can be coupled with a circuit to form a resistance measurement circuit (e.g., Wheatstone bridge). In some embodiments, one of the two horizontal strain gauges can be compressed while the other one of the two horizontal strain gauges can be extended during deformation of the horizontal strain gauges. The two horizontal strain gauges can be coupled with another circuit to form another resistance measurement circuit. In such embodiments, a total of four resistance measurement circuits may be formed.

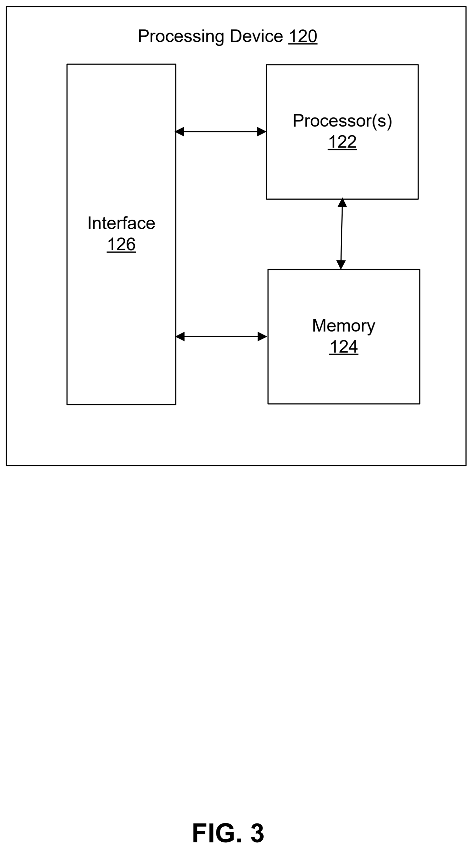

FIG. 3 is a schematic diagram illustrating an example of the processing device 120 of the system 100 of FIG. 1, according to some embodiments of the present disclosure. As shown in FIG. 3, the processing device 120 includes one or more processors 122, a memory 124, and an interface 126 electrically coupled to each other. The processing device 120 is configured to receive, via the interface 126, the riding data from the sensors 110, to process the riding data using the processor(s) 122, to generate an evaluation result of the processed riding data, and to transmit, via the interface 126, the evaluation result to the display device 130 for displaying the evaluation result. Instructions for operations performed by the processing device 120 can be stored in the memory 124.

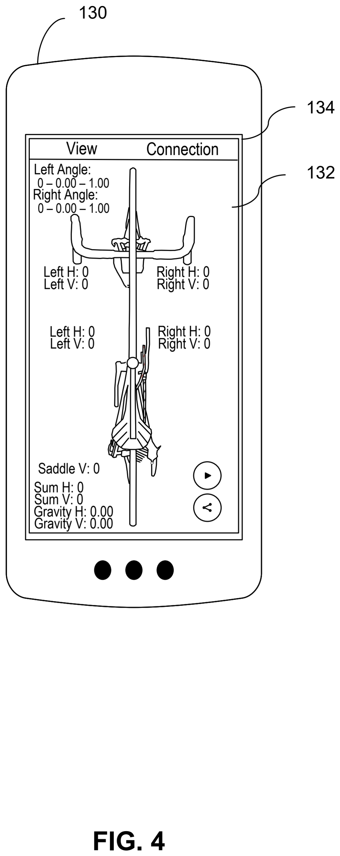

FIG. 4 is a schematic diagram illustrating an exemplary display device 130 of the system 100 of FIG. 1, according to some embodiments of the present disclosure. As shown in FIG. 4, the display device 130 can be configured to display a user interface 134 for an application (APP) 132 on the screen. In some embodiments, the APP 132 is configured to include or show the riding data, the processed riding data, or the evaluation result of the processed riding data. In some embodiments, the APP 132 can initialize all the riding data presented on the screen with a default value, for example, "0," as the bicycle 114 remains stationary before a riding activity. In some embodiments, for the riding data related to a right handlebar 112, the APP 132 is configured to initially include or show values of a right vertical force (e.g., "Right V: 0") and of a right horizontal force (e.g., "Right H: 0"). In some embodiments, for the riding data related to a left handlebar 112, the APP 132 is configured to initially include or show values of a left vertical force (e.g., "Left V: 0") and of a left horizontal force (e.g., "Left H: 0").

In some embodiments, for riding data related to a right pedal of the bicycle 114, the APP 132 is configured to initially include or show a value of a right vertical force (e.g., "Right V: 0") and a value of a right horizontal force (e.g., "Right H: 0"). In some embodiments, the APP 132 is configured to further include or show a value of a right radial force and a value of a right tangential force, while the user is pedaling. In some embodiments, for riding data related to a left pedal of the bicycle 114, the APP 132 is configured to initially include or show values of a left vertical force (e.g., "Left V: 0") and of a left horizontal force (e.g., "Left H: 0"). In some embodiments, the APP 132 is configured to further include or show values of a left radial force and of a left tangential force, while the user is pedaling. In some embodiments, for riding data related to a saddle of the bicycle 114, the APP 132 is configured to initially include or show a value of a vertical force (e.g., "Saddle V: 0"). In some embodiments, for riding data related to a total force of the user riding the bicycle 114, the APP 132 is configured to initially include or show sums of vertical forces (e.g., "Sum V: 0") and of horizontal forces (e.g., "Sum H: 0"). In some embodiments, for the riding data related to a vertical gravity of the user riding the bicycle 114, the APP 132 is configured to initially include or show values of a vertical gravity (e.g., "Gravity V: 0") and of a horizontal gravity (e.g., "Gravity H: 0").

In some embodiments, for bike fitting (e.g., adjusting riding parameters for a user), training, and coaching purposes and in different cycling scenarios, different applications can be provided to the user before, during, or after the user rides the bicycle 114, according to evaluation results of different riding data (e.g., different riding parameters extracted from the riding data) sensed during the user riding the bicycle 114.

In some embodiments, for indoor cycling activities, the sensors 110 located on the handlebars 112 of the bicycle 114 can obtain (e.g., sense, measure, or detect) riding data before, during, or after the user rides the bicycle 114. The riding data can include posture, center of gravity, cadence (e.g., pedaling frequency), body sway pattern, and force or weight distribution. The system 100 is enabled to use the riding data (for example, by the processing device 120) to perform a riding strategy analysis, a weight or geometric adjustment, a comfort or training effect, or a review of rehabilitation treatment effects for the user. Such determinations can be provided by the APP 132 run by the user on the display device 130, for example, a user device, a bike computer on the bicycle 114, or a cycling computer on the bicycle 114, e.g., via screens of each. In some embodiments, the handlebars 112 can receive additional riding data sensed by one or more other sensors located on the user or the bicycle 114. The additional riding data can include a heart rate.

In some embodiments, for outdoor cycling activities, the sensors 110 located on the handlebars 112 of the bicycle 114 can obtain (e.g., sense, measure, or detect) riding data before, during, or after the user rides the bicycle 114. The riding data can include posture, center of gravity, cadence, body sway pattern, turn pattern, force or weight distribution, road grade, road resistance, or riding wind resistance. The system 100 is enabled to use the riding data to perform a riding strategy analysis, a weight distribution or geometric adjustment, a comfort or training effect for the user, and to provide road condition information sensed or environmental information sensed, to the user. Such determinations can be provided by the APP 132 run by the user on the display device 130, for example, a user device, a bike computer on the bicycle 114, or a cycling computer on the bicycle 114, e.g., via screens of each. In some embodiments, the handlebars 112 can receive additional riding data sensed by one or more sensors located on the user or the bicycle 114. The additional riding data can include a heart rate.

In some embodiments, for the indoor and outdoor cycling activities, the riding data obtained by the sensors 110 located on the handlebars 112 of the bicycle 114 can be processed and integrated by the processing device 120 to implement an application function, such as a sports science and technology knowledge establishment or a customized or virtual coach, an artificial intelligence (AI) analytical technique, a dynamic riding sensing technique, a training or visibility of rehabilitation treatment effect, or a fitness application. Such application functions can be provided by the APP 132 run by the user on the display device 130, for example, a user device, a bike computer on the bicycle 114, or a cycling computer on the bicycle 114, e.g., via screens of each. Such implementations utilize the collected data in improving efficiency of fitness training, coaching, and rehabilitation.

In some embodiments, for an indoor sensing application, the sensors 110 located on the handlebars 112 of the bicycle 114 can obtain (e.g., sense, measure, or detect) riding data such as riding posture center of gravity variation or distribution (e.g., a proportion of body weight applied to the handlebars 112) while a user rides the bicycle 114. By processing the riding data, the processing device 120 can digitize and evaluate the user's perception. For example, the processing device 120 can calculate cadence information from the riding data. Then, the processing device 120 can evaluate (e.g., predict or quantify) the user's fatigue or comfort while the user rides the bicycle 114. In some embodiments, the indoor sensing application can be used in a fitness application.

In some embodiments, for a training application, the sensors 110 located on the handlebars 112 of the bicycle 114 can obtain (e.g., sense, measure, or detect) riding data such as variations or distributions in a user's center of gravity (e.g., a proportion of body weight applied to the handlebars 112) while the user rides the bicycle 114. By processing the riding data, the processing device 120 can evaluate training effects. The processing device 120 can perform an efficient analysis of riding, e.g., according to a body sway pattern extracted from the riding data. The processing device 120 can evaluate a core muscle strength, e.g., according to a core muscle strength test.

In some embodiments, for an outdoor sensing application, the sensors 110 located on the handlebars 112 of the bicycle 114 can obtain (e.g., sense, measure, or detect) riding data such as road condition, road type, or riding status of the user as well as the bicycle 114. In some embodiments, the road condition can include different road resistances and road incline, e.g., uphill or downhill. In some embodiments, the road type can include an asphalt road (flat/uphill/downhill), a gravel road, a rocky road, a stony road, or combination thereof. In some embodiments, the riding status of the user can be the user's center of gravity, the cadence, the strength, a contact point, or combination thereof, while the user rides the bicycle 114. By processing the riding data, the processing device 120 can digitize and evaluate the user's perception. For example, the processing device 120 can calculate cadence information from the riding data. Then, the processing device 120 can determine (e.g., predict or quantify) the user's riding status while the user rides the bicycle 114. In some embodiments, the riding status can be fatigue, comfort, or any other physical condition determined based on the riding data. In some embodiments, the outdoor sensing application can be applied in a smart bike sensing technology application.

In some embodiments, for a sports science and technology knowledge application, the sensors 110 located on the handlebars 112 of the bicycle 114 can obtain (e.g., sense, measure, or detect) riding data for basic research in cycling activities. In some embodiments, the processing device 120 can build a cycling activity model by training on the riding data to analyze a user's riding status and provide riding instruction, thereby improving the user's riding experience.

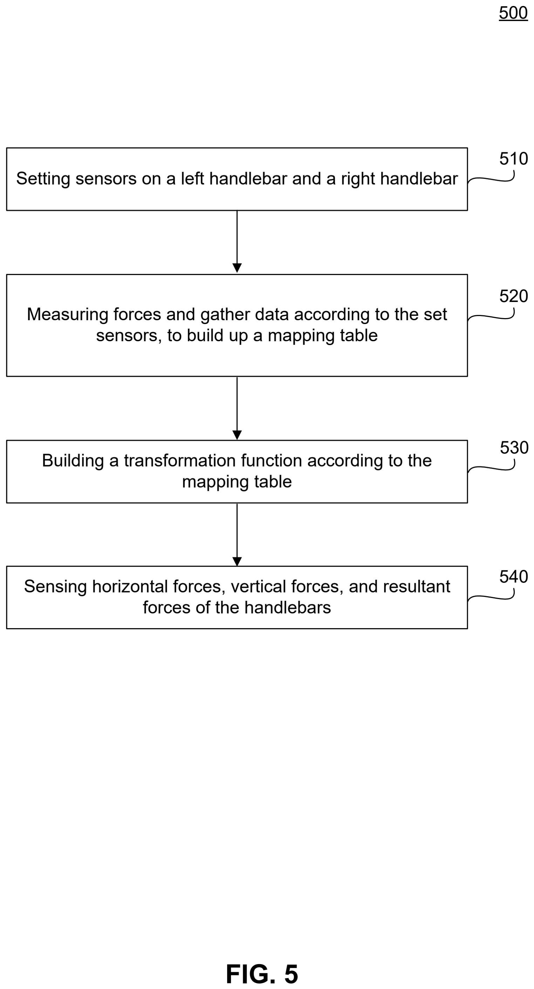

FIG. 5 is a flowchart illustrating an example method 500 performed by the exemplary system of FIG. 1, according to some embodiments of the present disclosure. Before or when a user starts cycling, the system 100 can be configured to perform steps 510-540 of the method 500 and other steps for evaluating cycling activities as described herein. In step 510, the system 100 sets sensors on a left handlebar and a right handlebar. For example, the system 100 is configured to set (e.g., locate or attach) the sensors, for example, strain gauges, on the left handlebar and the right handlebar of a bicycle, before the user rides the bicycle. In some embodiments, the operations of setting the sensors are described above with reference to FIG. 2. In step 520, the system 100 measures forces and gathers data according to the set sensors (e.g., sensors located or attached on the left and right handlebars), to build up a mapping or look-up table. In some embodiments, the mapping (e.g., look-up table) includes the correspondences between the forces and deformation of the sensors. In step 530, the system 100 builds a transformation function according to the mapping table. In some embodiments, the transformation function includes a decoupling matrix for obtaining (e.g., isolating) the riding data in vertical and horizontal directions.

For example, the system 100 may derive the following equations according to the correspondences between the forces and the deformation of the sensors in the mapping or look-up table:

$$\begin{cases} A1V + A2H = ADC1 \\ B1V + B2H = ADC2 \end{cases}$$

where A1, A2, B1, and B2 are coefficients derived from the mapping or look-up table; ADC1 and ADC2 are deformation (or output) of the sensors; V is a vertical force; and H is a horizontal force.

Then, the system 100 may derive the following equation:

$$\begin{pmatrix} A1 & A2 \\ B1 & B2 \end{pmatrix} \begin{pmatrix} V \\ H \end{pmatrix} = \begin{pmatrix} ADC1 \\ ADC2 \end{pmatrix}$$

where $\begin{pmatrix} A1 & A2 \\ B1 & B2 \end{pmatrix}$ is a coupling matrix characterizing the cross-coupling between vertical and horizontal force components. Accordingly, the system 100 may obtain the decoupling matrix, $\begin{pmatrix} A1 & A2 \\ B1 & B2 \end{pmatrix}^{-1}$.

In step 540, the system 100 senses horizontal forces, vertical forces, and resultant forces of the handlebars 112. For example, the sensors 110 may be configured to obtain the riding data (e.g., sense, measure, or detect), and the processing device 120 may be configured to obtain (e.g., calculate) a vertical force, a horizontal force, and a resultant force of the riding data by using the built transformation function.

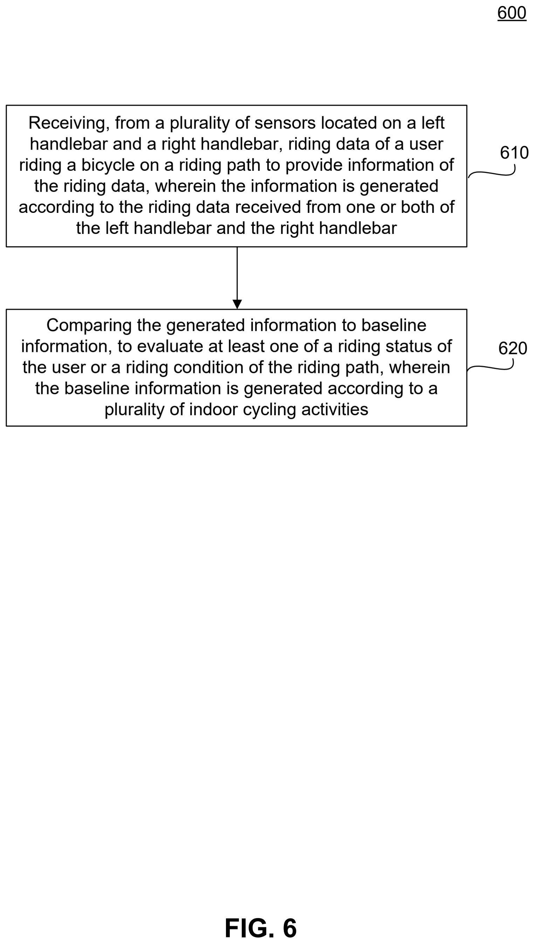

FIG. 6 is a flowchart illustrating an example method 600 performed by the system 100 of FIG. 1, according to some embodiments of the present disclosure. Before or when a user starts cycling, the system 100 can be configured to perform steps 610-620 of the method 600 and other steps for evaluating cycling activities as described herein. In step 610, the system 100 receives, from a plurality of sensors (e.g., the sensor(s) 110) located on a left handlebar and a right handlebar, riding data of a user riding a bicycle on a riding path to provide information of the riding data, wherein the information is generated according to the riding data received from one or both of the left handlebar and the right handlebar. In step 620, the system compares the generated information to baseline information, to evaluate at least one of a riding status of the user or a riding condition of the riding path. For example, the baseline information can be generated according to a plurality of indoor cycling activities.

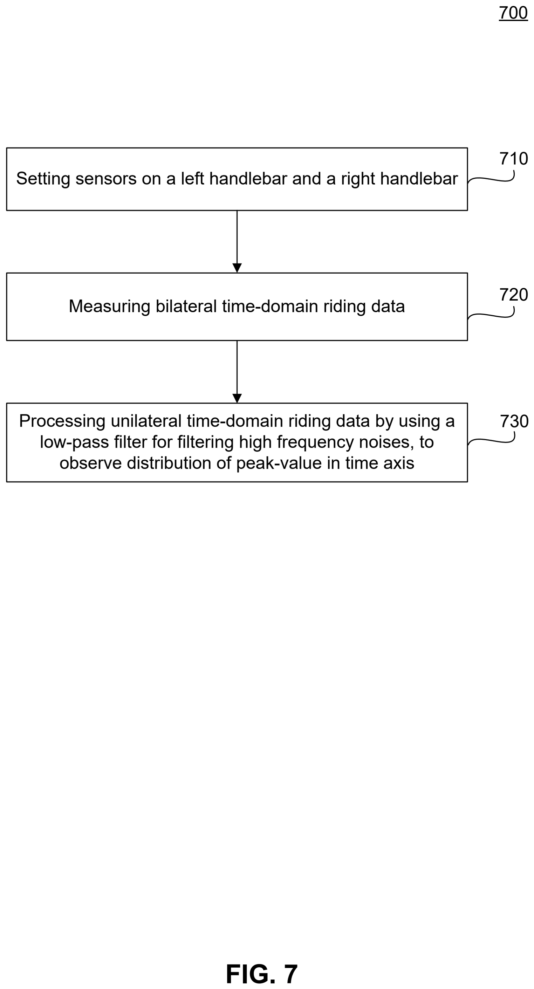

FIG. 7 is a flowchart illustrating an example method 700 performed by the system 100 of FIG. 1, according to some embodiments of the present disclosure. Before or when a user starts cycling, the system 100 can be configured to perform steps 710-730 of the method 700 and other steps for evaluating cycling activities as described herein. In step 710, the system 100 sets sensors (e.g., strain gauges) on a left handlebar and a right handlebar. For example, the system 100 is configured to set (e.g., locate or attach) the sensors on the left handlebar and the right handlebar of a bicycle, before the user rides the bicycle. In some embodiments, the operations of setting the sensors are described above with reference to FIG. 2. In step 720, the system 100 measures bilateral time-domain data. For example, the system 100 is configured to obtain (e.g., sense, measure, or detect) bilateral time-domain riding data from both the right and left handlebars while the user rides the bicycle. Then, the system 100 is configured to perform signal processing on unilateral time-domain riding data obtained from only one of the right and left handlebars. In step 730, the system 100 processes the unilateral time-domain riding data by using a low-pass filter for filtering high frequency noises, to obtain a distribution of peak-value signals on a time axis. In some embodiments, the system 100 is configured to obtain (e.g., evaluate) a riding status of the user according to a result of the processing of the unilateral time-domain riding data. In some embodiments, the system 100 is configured to determine (e.g., evaluate) a proper riding posture of the user according to a signal concentration. In some embodiments, the system 100 is configured to determine (e.g., evaluate) a poor riding posture of the user according to an excessive signal dispersion.

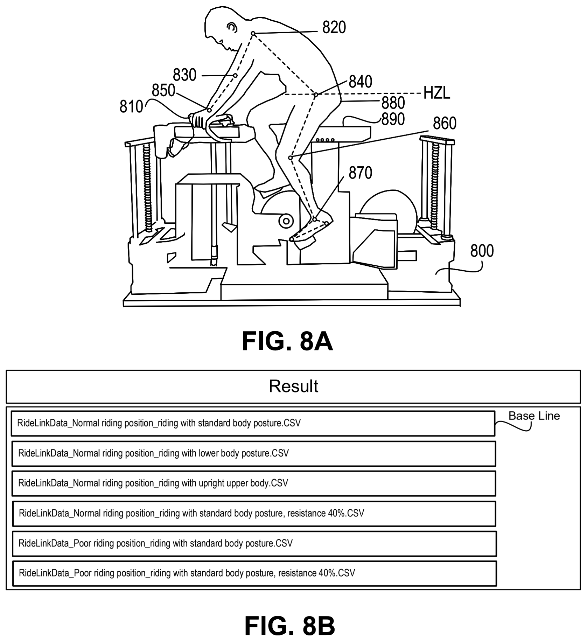

FIG. 8A is a schematic diagram illustrating an example configuration of a baseline of cycling activities in indoor cycling scenarios to the system 100 of FIG. 1, according to some embodiments of the present disclosure. As shown in FIG. 8A, an indoor (e.g., stationary) bicycle 800 can be used to gather cycling baseline data in advance for comparison with outdoor cycling performance, to evaluate a riding status of a user or a riding condition of a riding path during an outdoor cycling activity. In some embodiments, the cycling baseline data can be obtained by setting different riding parameters in indoor cycling scenarios to simulate different riding statuses or conditions in outdoor cycling scenarios. In some embodiments, sensors (e.g., strain gauges) can be set (e.g., located or attached) on left and right handlebars 810 of the indoor bicycle 800, before the user rides the indoor bicycle 800. In some embodiments, the operations of setting the sensors are described above with reference to FIG. 2. Then, the system 100 can be configured to record or simulate different riding statuses or conditions by setting different riding parameters, for example, resistance (e.g., 20% or 40%), and cadence (e.g., 70 rpm). In some embodiments, the system 100 is configured to record or simulate a normal riding position (e.g., which can be determined as an outcome after a testing procedure, that may be replaced by other terms, such as "autofitting," "fitted posture," or "fitted position") according to a shoulder angle formed by a shoulder point 820, an elbow point 830, and a back point 840 (e.g., 69 degrees), an elbow angle formed by the elbow point 830, the shoulder point 820, and a wrist point 850 (e.g., 167 degrees), a back angle formed by the shoulder point 820, the back point 840, and the horizontal line HZL, shown as the dashed line in FIG. 8A, passing through the back point 840 and parallel to the ground surface (e.g., 44 degrees), a knee angle formed by the knee point 860, the back point 840, and an ankle point 870 (e.g., 137 degrees), and a sitting angle formed by the user's hip position 880 and contact surface of a saddle 890 or the ground surface (e.g., 77 degrees). In some embodiments, the system 100 can record or simulate a poor riding position by raising or lowering a saddle height of the indoor bicycle 800, for example, by setting the saddle height riding parameter as raising or lowering 4 centimeter (cm) compared to a baseline saddle height.

In some embodiments, the system 100 can simulate different riding statuses or conditions by setting different riding parameters. The system 100 can be configured to perform various simulation. For example, the system 100 can simulate the normal riding position, as described with reference to FIG. 8A, to configure the baseline. The system 100 can simulate a poor riding position by raising a saddle height of the bicycle 800 by 4 cm. In some embodiments, the system 100 can also simulate a riding posture by setting a lower body posture. The lower body posture can refer to a user's upper body leaning forward and nearly parallel to the horizontal plane (e.g., an angle, e.g., a back angle, between the upper body and the horizontal plane is around 15 to 35 degrees). In some embodiments, the system 100 can simulate a change of the center of gravity by setting the upper body in an upright posture. The upright upper body posture can refer to a user sitting with the user's upper body held straight (e.g., an angle, e.g., the back angle, between the upper body and the horizontal plane is around 65 to 75 degrees or is larger than 75 degrees). In some embodiments, the system 100 can also simulate a riding posture by setting a standard body posture. The standard body posture, for example, can refer to a user's upper body leaning slightly forward and forming an angle of approximately 45 to 55 degrees with respect to the horizontal plane. In some embodiments, the standard body posture can fall between the lower body posture and the upright upper body posture and may be further customized based on the body geometry of individual rider. In some other embodiments, the system 100 can simulate an uphill ride by setting (e.g., increasing) a larger resistance and a pedaling power. For example, the resistance may be set 40% compared to a baseline resistance of 20%, but the present disclosure is not limited thereto.

FIG. 8B is a schematic diagram illustrating example results of simulations, according to some embodiments of the present disclosure. The results may include a baseline associated with a riding status as the normal riding position and the user sitting on the saddle with a standard body posture as described with reference to FIG. 8A, a baseline associated with the normal riding position and the user sitting on the saddle with the lower body posture, a baseline associated with a riding status as the normal riding position and the user sitting on the saddle with the upright upper body, a baseline associated with a riding status as the normal riding position and the user sitting on the saddle with a standard body posture as described with reference to FIG. 8A. and setting a resistance of 40%, a baseline associated with a riding status as the poor riding position (e.g., raising the saddle height by 4 cm) with a standard body posture as described with reference to FIG. 8A., and a baseline associated with a riding status as the poor riding position (e.g., by raising the saddle height by 4 cm) and the user sitting on the saddle with a standard body posture as described with reference to FIG. 8A. and setting a resistance of 40%.

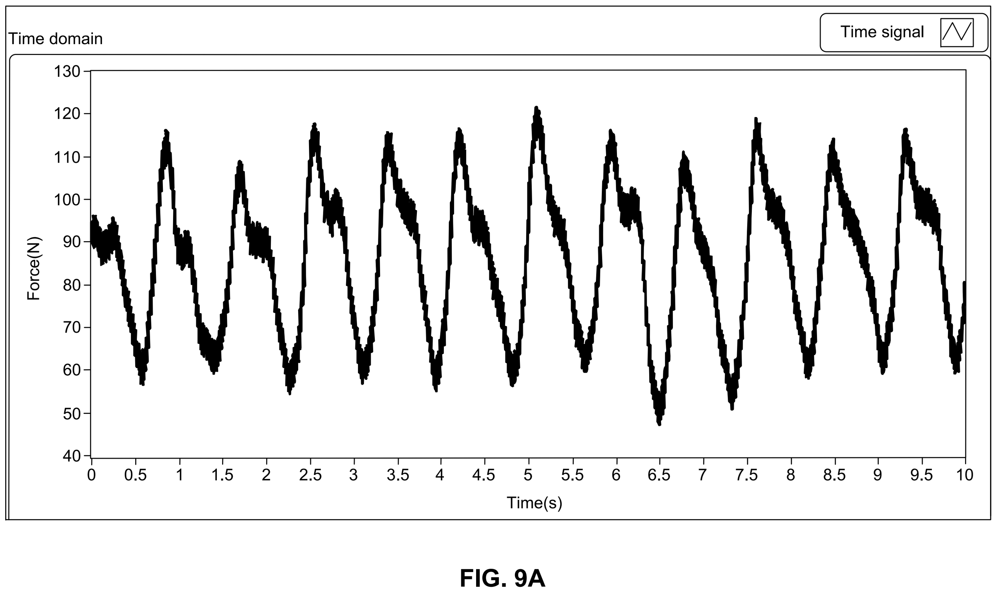

FIG. 9A is a schematic diagram illustrating example riding data in time domain obtained by the system 100 of FIG. 1, according to some embodiments of the present disclosure. As shown in FIG. 9A, the horizontal axis represents time in seconds (s) and the vertical axis represents force in Newtons (N). In some embodiments, the system 100 can be configured to establish a baseline of a normal riding position by setting a saddle height of a bicycle based on a reasonable reference value. For example, the reference value may refer to a user's inseam length or standover height (e.g., the vertical distance from the ground surface to the bicycle's top tube measured when the user straddles the bicycle) with additional customized adjustments. In some embodiments, an appropriate bike size for the user may be determined by adding approximately 1 inch (2.54 cm) to the user's inseam length to obtain a reasonable value of the standover height (e.g., ranging from 30 inches (76.2 cm) to 35 inches (88.9 cm)), but the present disclosure is not limited thereto. Then, the system 100 can be configured to obtain (e.g., sense, measure, or detect) the riding data (or signals) in the time domain, when the user rides the bicycle.

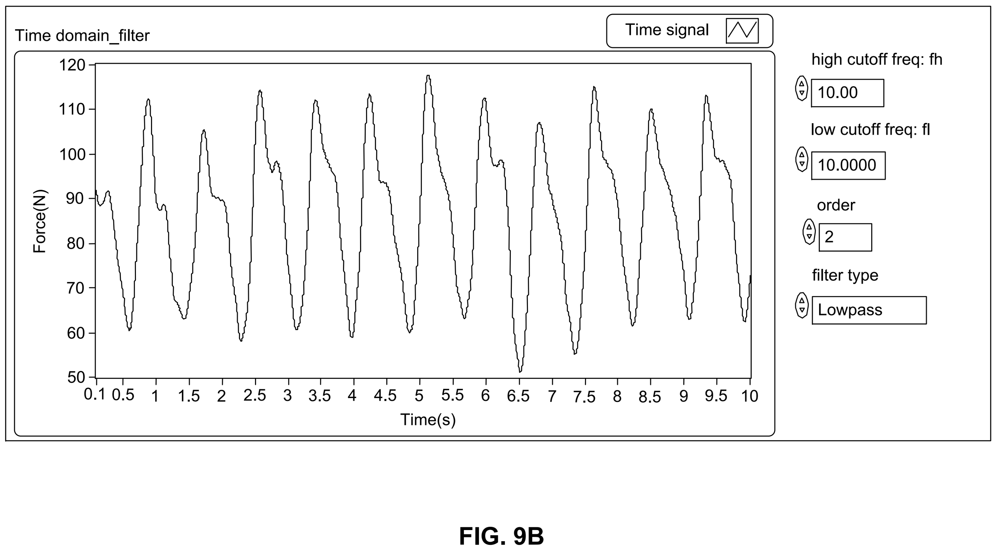

FIG. 9B is a schematic diagram illustrating example signal processing of riding data in time domain performed by the system 100 of FIG. 1, according to some embodiments of the present disclosure. As shown in FIG. 9B, the horizontal axis represents time in seconds (s) and the vertical axis represents force in Newtons (N). In an illustrated embodiment, the system 100 can be configured to process the riding data in time domain (for example, obtained in FIG. 9A, based on the established baseline of the normal riding position, i.e., a saddle height of a bicycle based on a reasonable reference value). The riding data in time domain can be processed to suppress high-frequency noises by applying a filter type of "Lowpass" with a cutoff frequency around 10 Hz and a filter order of a value of 2, thereby resulting in lowpass filtered baseline riding data. In some embodiments, the filter order may include integer values including, but not limited to, e.g., 1, 2, 4, or higher values. The higher the filter order selected, the more efficient the attenuation of frequency components above the cutoff frequency.

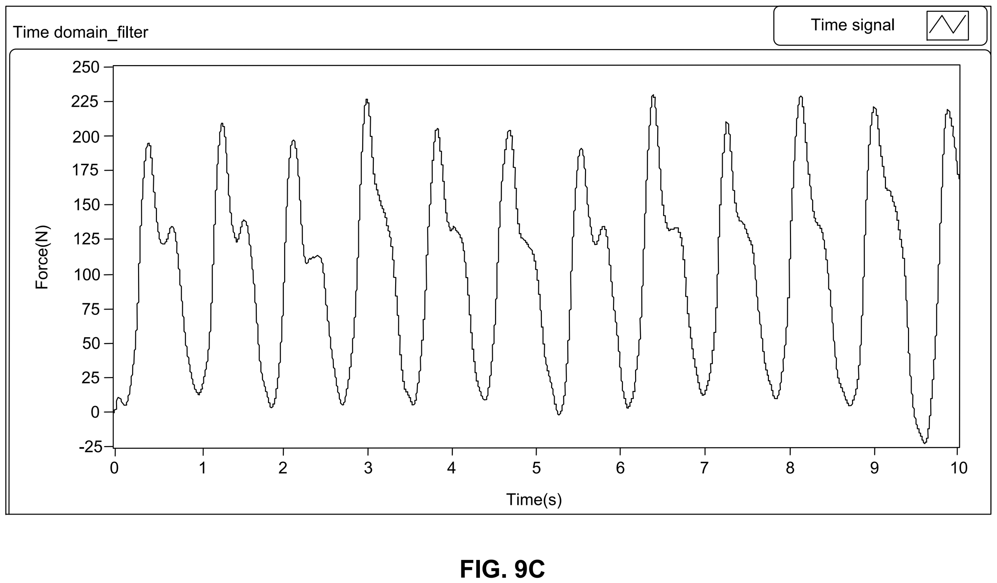

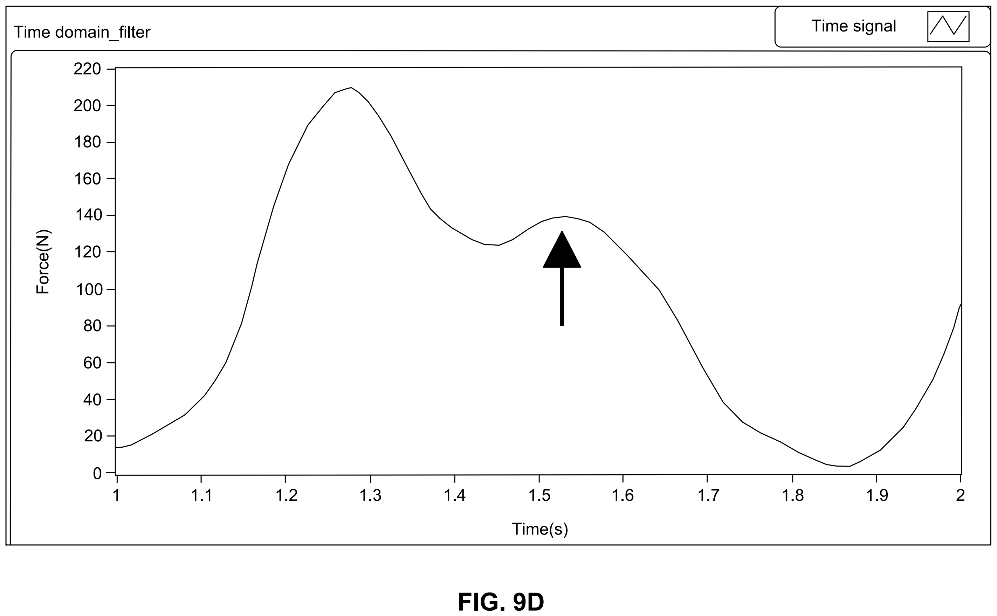

FIGs. 9C and 9D are schematic diagrams illustrating examples of signal processing of riding data in time domain performed by the system 100 of FIG. 1, according to some embodiments of the present disclosure. As shown in FIGs. 9C and 9D, the horizontal axis represents time in seconds (s) and the vertical axis represents force in Newtons (N). In some embodiments, the system 100 can be configured to process both riding data corresponding to a poor riding position (as shown in FIG. 9C) and riding data corresponding to a normal riding position (as shown in FIG. 9B) to observe the lowpass filtered results in different riding positions or riding path conditions. The saddle height of the normal riding position is set as a baseline, where the poor riding position can be obtained by raising the saddle height of the bicycle by, for example, 4 cm, and changing total resistance to, for example, 40%, compared to those factors of the baseline. Furthermore, by applying peak value filtering shown in FIG. 9D, for example, during the time period of 1-2 seconds (s), a peak value below the force threshold value (e.g., 162 N) can be removed (annotated by the arrow in FIG. 9D) to enable focusing on meaningful results for analysis. The system 100 can obtain 12 peak values after applying the peak value filter to the poor riding data obtained in FIG. 9C, and output processed poor riding data accordingly.

In some embodiments, the system 100 is configured to perform a comparison and statistical calculation between the processed baseline riding data obtained in FIG. 9B, and the processed poor riding data obtained in FIG. 9C, including metrics such as an arithmetic mean, a median, a mode, a sum of values, an RMS, a standard deviation, a variance, a kurtosis, or a skewness, or any combination thereof.

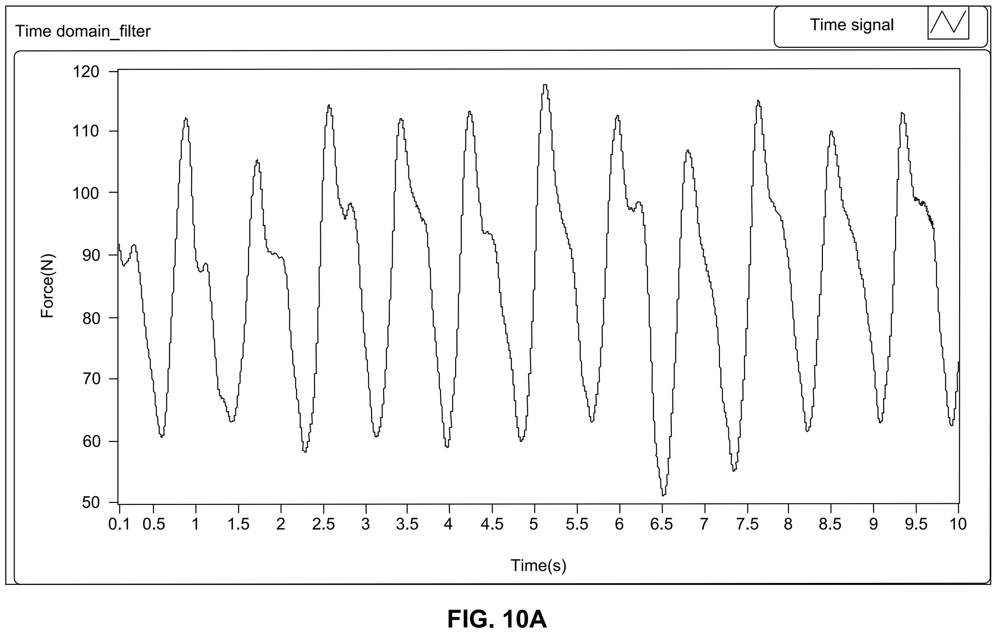

FIG. 10A is a schematic diagram illustrating example riding data in time domain obtained by the system 100 of FIG. 1, according to some embodiments of the present disclosure. As shown in FIG. 10A, the horizontal axis represents time in seconds (s) and the vertical axis represents force in Newtons (N). In some embodiments, the system 100 can be configured to establish a baseline by setting a saddle height of a bicycle based on a reasonable reference value (e.g., a rider's inseam length or standover height with further customized adjustments, but the present disclosure is not limited thereto) and resistance at 20%. Then, the system 100 can be configured to obtain (e.g., sense, measure, or detect) riding data by using handlebar sensors (e.g., sensors 110 in FIG. 1) when a user rides the bicycle. The system 100 can also be configured to apply a low-pass filter set at 10 Hz as well as a peak value filter to the riding data. As shown in FIG. 10A, the processed data includes 11 peak values. Processing the data can further determine an average cadence of 70.5 rpm, and a power of 85.8 W.

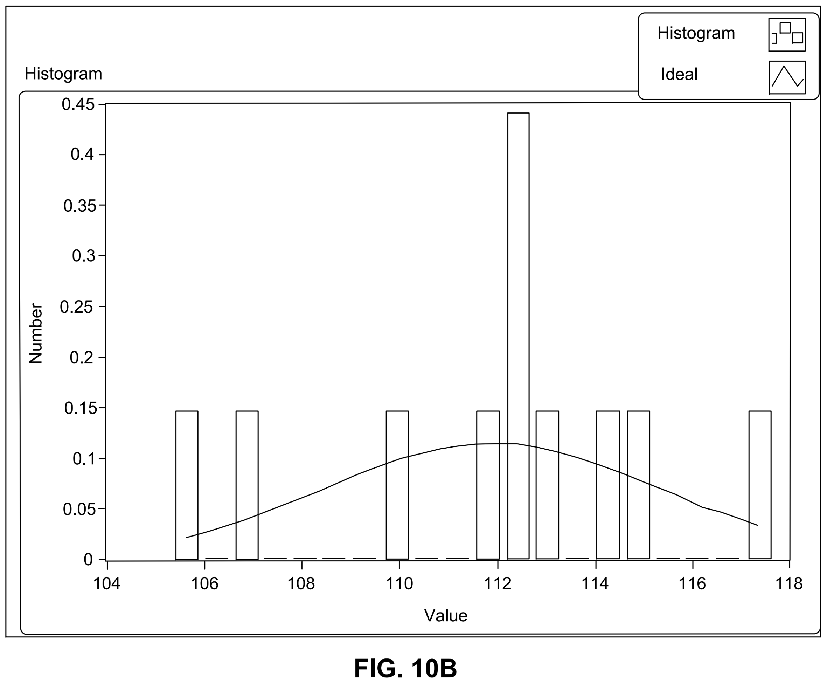

FIG. 10B is a schematic diagram illustrating an example histogram of statistical results of the processed data illustrated of FIG. 10A, according to some embodiments of the present disclosure. As shown in FIG. 10B, a force value around 112 Newtons (N) has the maximum number of occurrences.

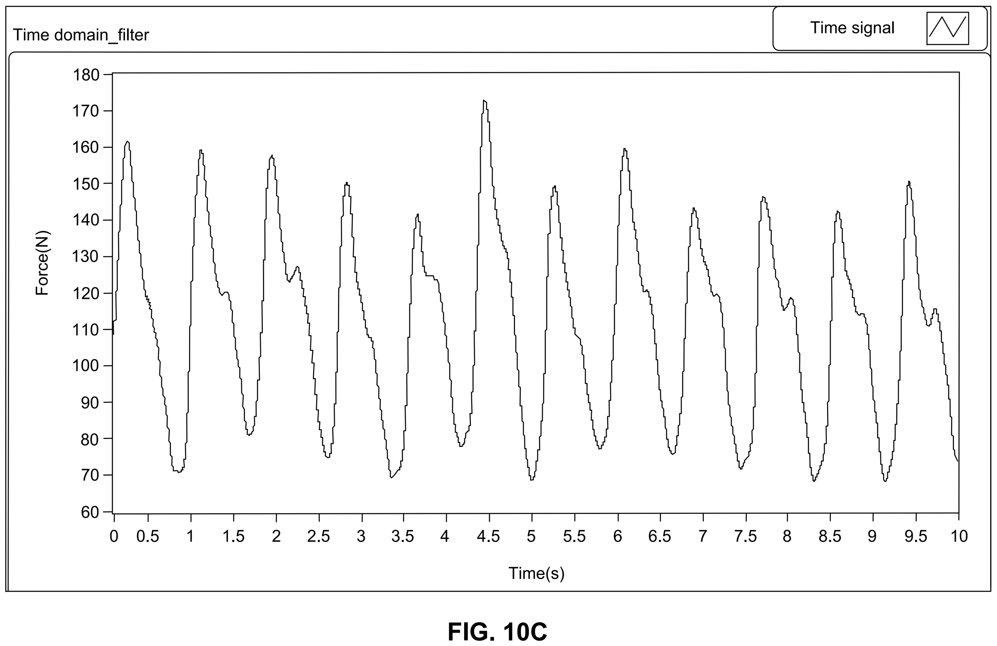

FIG. 10C is a schematic diagram illustrating example riding data in time domain obtained by the system 100 of FIG. 1, according to some embodiments of the present disclosure. As shown in FIG. 10C, the horizontal axis represents time in seconds (s) and the vertical axis represents force in Newtons (N). In some embodiments, the system 100 can be configured to simulate an experimental ride setting by raising the saddle height of the bicycle by 4 cm compared to the baseline saddle height and keeping the resistance at 20%. Then, the system 100 can be configured to obtain (e.g., sense, measure, or detect) riding data by using handlebar sensors (for example, sensors 110) when the user rides the bicycle. A low-pass filter may be set at 10 Hz and a peak value filter may be applied to the riding data. As shown in FIG. 10C, the processed data includes 12 peak values. Processing the data can further determine an average cadence of 71.7 rpm, and a power of 88 W.

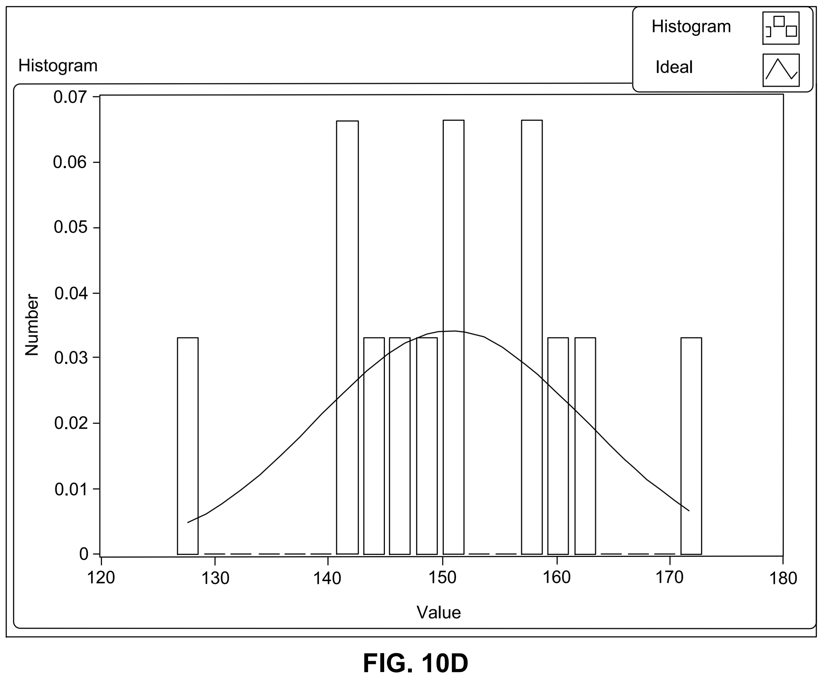

FIG. 10D is a schematic diagram illustrating an example histogram of statistical results of the processed data illustrated in FIG. 10C, according to some embodiments of the present disclosure. As shown in FIG. 10D, force values around 140, 150, and 160 have the maximum number of occurrences. By observing changes between the baseline and the experimental ride data, a strength value and an amplitude value of the handlebar sensors in the experimental ride data are increased significantly.

Experimental results and efficacy are shown in Table 1.

| Riding status | Variance | Interquartile range (IQR) | Average cadence | Average power |
|---|---|---|---|---|
| Resistance at 20%, Normal riding position, Standard body posture | 12 (reference) | 3.66 (reference) | 70.5 | 85.8 |
| Resistance at 20%, Poor riding position (e.g., Raise saddle height by 4 cm), Standard body posture | 135 (+11.3 times) | 15.8 (+4.3 times) | 71.7 | 88 |
| Resistance at 20%, Normal riding position, Lower body posture | 51.8 (+4.3 times) | 8.24 (+2.3 times) | 68.4 | 81.2 |
| Resistance at 20%, Normal riding position, Upright upper body posture | 21.7 (+1.8 times) | 5.38 (+1.5 times) | 70.4 | 84.2 |

Referring to Table 1, the baseline can be established by setting the resistance at 20% and the riding status as a normal riding position as described with reference to FIG. 8A and the user sitting on the saddle with a standard body posture as described with reference to FIG. 8A. The baseline result shows a variance of 12, an interquartile range (IQR) of 3.66, an average cadence of 70.5 rpm, and an average power of 85.8 W. A first experimental riding setting can be established by the resistance being 20% and the riding status as a poor riding position (e.g., by raising the saddle height of the bicycle by 4 cm) and the user sitting on the saddle with a standard body posture as described with reference to FIG. 8A. The experimental results show a variance of 135, an IQR of 15.8, an average cadence of 71.7 rpm, and an average power of 88 W. Compared to the baseline setting, the variance increases 11.3 times and the IQR increases 4.3 times. A second experimental riding setting can be established by the resistance being 20% and based on the riding status of a normal riding position as described with reference to FIG. 8A with lower body posture. The experimental results show a variance of 51.8, an IQR of 8.24, an average cadence of 68.4 rpm, and an average power of 81.2 W. Compared to the baseline setting, the variance increases 4.3 times and the IQR increases 2.3 times. A third experimental riding setting can be established by the resistance being 20% and based on the riding status of a normal riding position as described with reference to FIG. 8A with upright upper body posture. The experimental results show a variance of 21.7, an IQR of 5.38, an average cadence of 70.4 rpm, and an average power of 84.2 W. Compared to the baseline setting, the variance increases 1.8 times and the IQR increases 1.5 times.

Experimental results and efficacy are also shown in Table 2.

| Riding status | Variance | Interquartile range (IQR) | Average cadence | Average power |
|---|---|---|---|---|
| Resistance at 40%, Normal riding position, Standard body posture | 42 (+3.5 times) | 8.24 (+2.3 times) | 69.4 | 317 |
| Resistance at 40%, Poor riding position (e.g., Raise saddle height by 4 cm), Standard body posture | 178 (+14.8 times) | 22.7 (+6.2 times) | 69.9 | 322 |

Referring to Table 2, a fourth experimental riding setting may be established by the resistance at 40% and the riding status being a normal riding position as described with reference to FIG. 8A and the user sitting on the saddle with a standard body posture as described with reference to FIG. 8A. The experimental results show a variance of 42, an IQR of 8.24, an average cadence of 69.4 rpm, and an average power of 317 W. Compared to the baseline setting, the variance increases 3.5 times, and the IQR increases 2.3 times. A fifth experimental riding setting can be established by setting the resistance at 40% and the riding status as a poor riding position (e.g., raising the saddle height of the bicycle by 4 cm) and the user sitting on the saddle with a standard body posture as described with reference to FIG. 8A. The experimental results show a variance of 178, an IQR of 22.7, an average cadence of 69.9 rpm, and an average power of 322 W. Compared to the baseline setting, the variance increases 14.8 times and the IQR increases 6.2 times. According to the experimental results described above, by analyzing the dispersion degree of data distribution, there are differences between the results of the respective experimental riding settings, but the trend is consistent with each other when the resistance and the power are increased. The experimental results also show that the baseline riding data may be used as a reference to confirm the normal riding position of the user, and to shift riding center of gravity of the user.

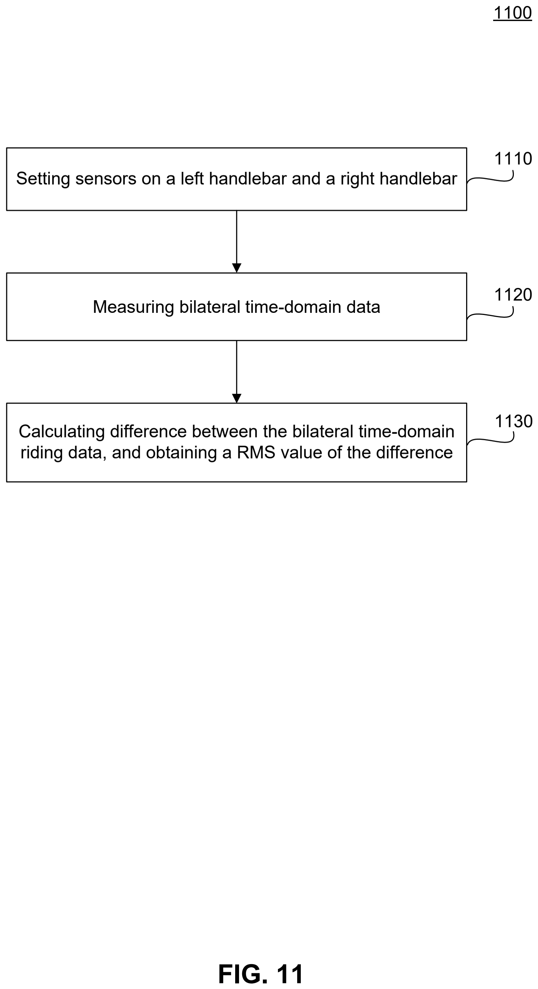

FIG. 11 is a flowchart illustrating an example method 1100 performed by the system 100 of FIG. 1, according to some embodiments of the present disclosure. Before or when a user starts cycling, the system 100 can be configured to perform steps 1110-1130 of the method 1100 and other steps for evaluating cycling activities as described herein. In step 1110, the system 100 sets sensors on a left handlebar and a right handlebar. For example, the system 100 is configured to set (e.g., locate or attach) the sensors, for example, strain gauges, on the left handlebar and the right handlebar of a bicycle, before the user rides the bicycle. In some embodiments, the operations of setting the sensors are described above with reference to FIG. 2. In step 1120, the system 100 measures bilateral time-domain data. For example, the system 100 is configured to obtain (e.g., sense, measure, or detect) bilateral time-domain riding data (e.g., vertical force data) from both the right and left handlebars while the user rides the bicycle. In step 1130, the system 100 calculates difference between the bilateral time-domain riding data from both the right and left handlebars and obtaining a root mean square (RMS) value of the difference, to obtain (e.g., evaluate) a riding status of the user. For example, the system 100 is configured to determine balance or coordination of left and right sides of the user according to the RMS value. In some embodiments, the smaller the RMS value, the more balanced and coordinated the left and right sides of the user are. The larger the RMS value, the less coordinated the left and right sides are.

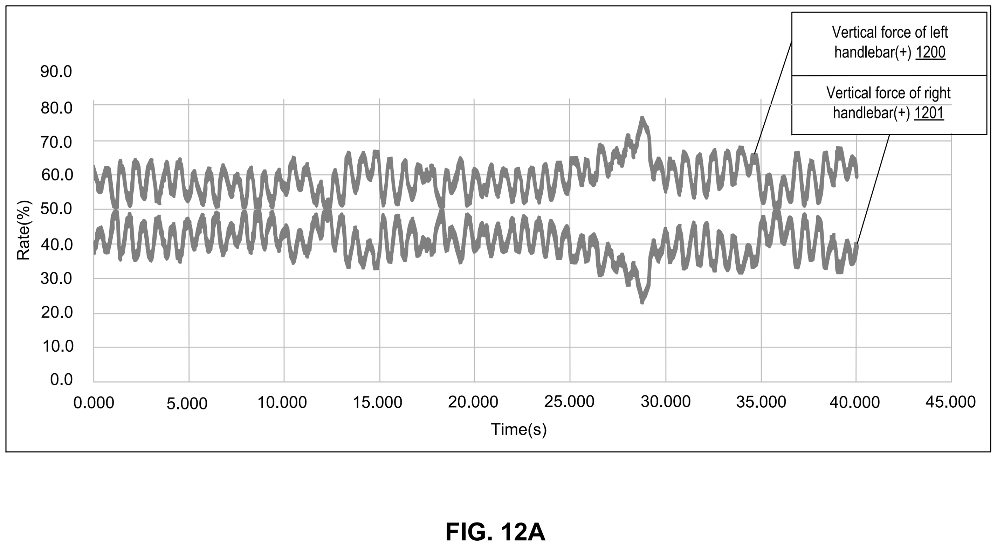

FIGs. 12A-12E are schematic diagrams illustrating example vertical force data and differences therebetween obtained by the system 100 of FIG. 1, according to some embodiments of the present disclosure. As shown in 12A-12E, the horizontal axis represents time in seconds (s) and the vertical axis represents force in rate (%).

In some embodiments, the system 100 is configured to establish a baseline by setting resistance at 0% and a riding status of a normal riding position, as described with reference to FIG. 8A. In such embodiments, the system 100 obtains (e.g., senses, measures, or detects) riding data by using sensors on handlebars of a bicycle when the user rides the bicycle. As shown in FIG. 12A, vertical force data of a left handlebar of the bicycle shown as an upper waveform 1200 and vertical force data of a right handlebar of the bicycle shown as a lower waveform 1201 correspond to the baseline.

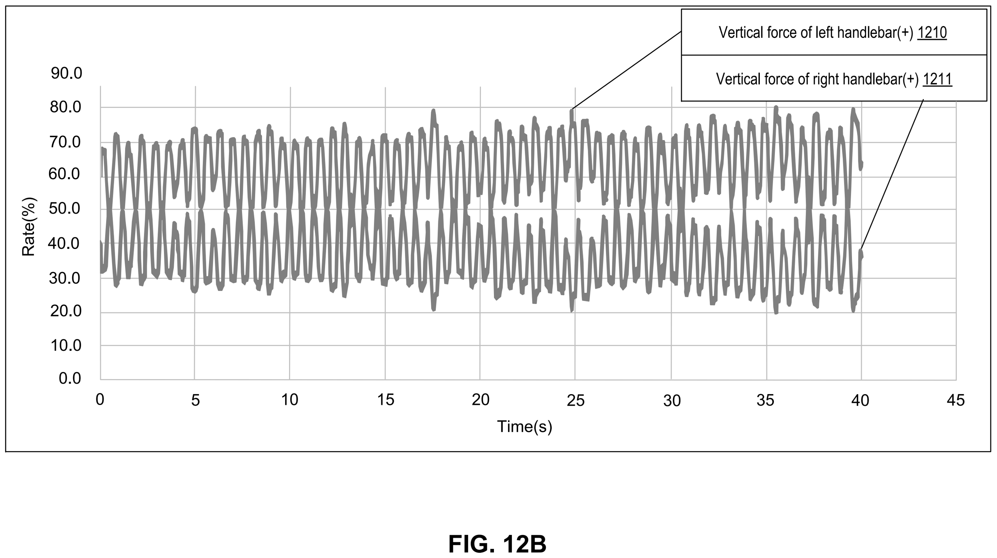

In some embodiments, the system 100 is configured to establish a first experimental ride setting by a riding status of a poor riding status (e.g., by raising a saddle height of the bicycle by 4 cm) compared to the baseline. In such embodiments, the system 100 obtains (e.g., senses, measures, or detects) riding data by using the sensors on the handlebars of the bicycle when the user rides the bicycle. As shown in FIG. 12B, vertical force data of the left handlebar shown as an upper waveform 1210 and vertical force data of the right handlebar shown as a lower waveform 1211 correspond to the first experimental ride settings.

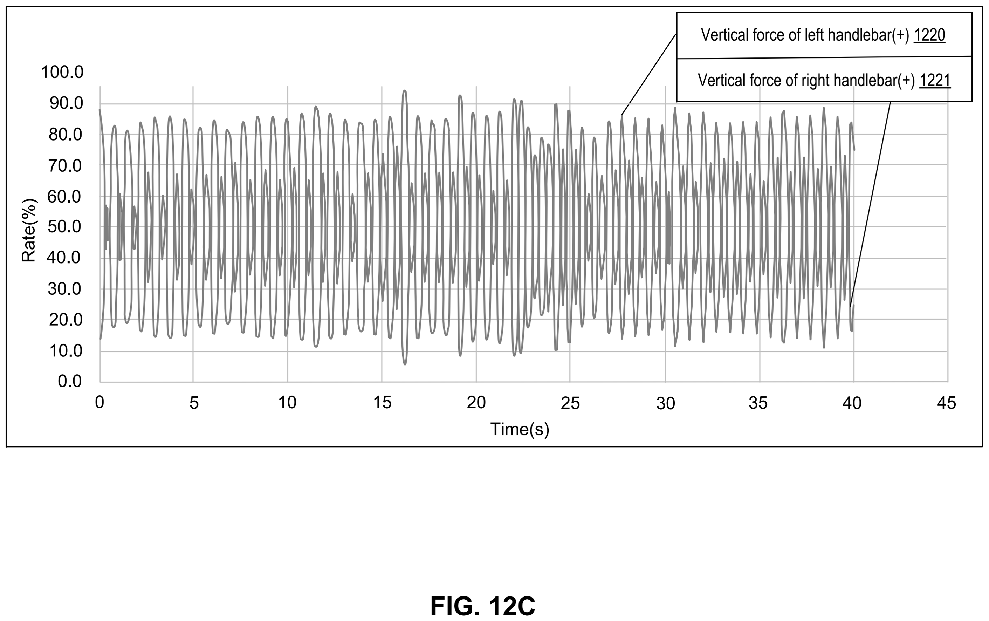

In some embodiments, the system 100 is configured to establish a second experimental ride setting by a riding status of a poor riding status (e.g., by raising the saddle height of the bicycle by 4 cm) compared to the baseline and setting the resistance at 30%. In such embodiments, the system 100 obtains (e.g., senses, measures, or detects) riding data by using the sensors on the handlebars of the bicycle when the user rides the bicycle. As shown in FIG. 12C, vertical force data of the left handlebar shown as an upper waveform 1220 and vertical force data of the right handlebar shown as a lower waveform 1221 correspond to the second experimental riding settings.

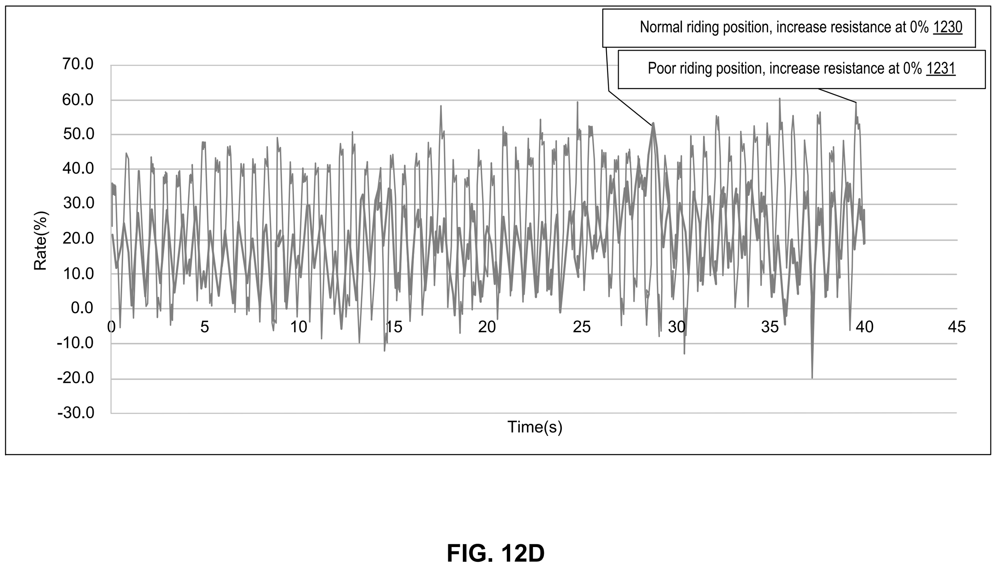

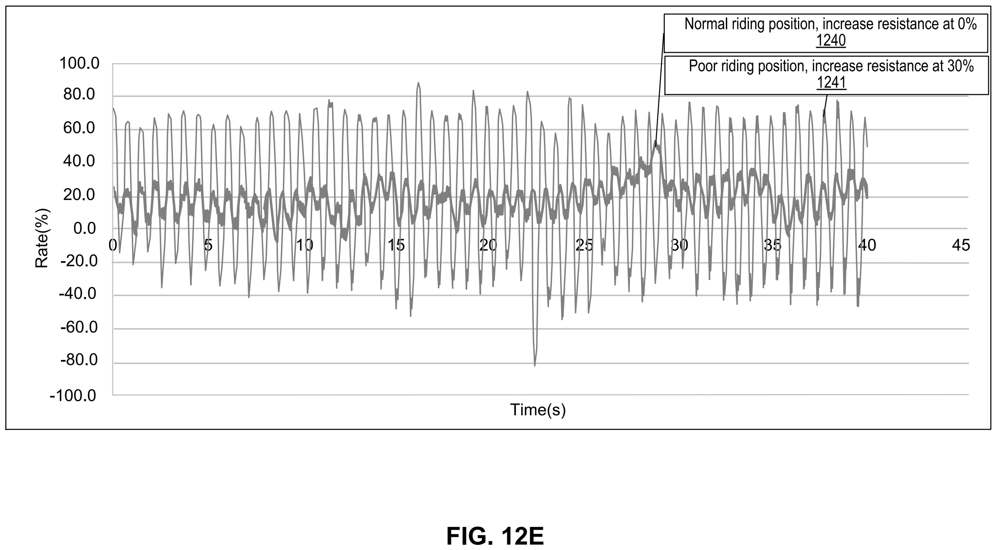

In some embodiments, the system 100 is configured to obtain (e.g., determine, or calculate) differences in the vertical force data between the left and right handlebars by applying (e.g., using) an RMS calculation, to evaluate a riding stability of the user riding the bicycle. As shown in FIG. 12D, according to the baseline, the difference of the vertical force data between the left and right handlebars is shown as a dark gray waveform 1230, while according to the first experimental riding setting, the difference of the vertical force data between the left and right handlebars is shown as a light gray waveform 1231. As shown in FIG. 12E, according to the baseline, the difference of the vertical force data between the left and right handlebars is shown as a dark gray waveform 1240, while according to the second test experimental setting, the difference of the vertical force data between the left and right handlebars is shown as a light gray waveform 1241.

Experimental riding settings, experimental results, and efficacy are shown in Table 3.

| Experimental riding settings | Experimental results (RMS) |
|---|---|
| Normal riding position, resistance 0% | 28.9 |
| Normal riding position, resistance 30% | 40.3 |
| Poor riding position (e.g., Raise saddle height by 4 cm), resistance 0% | 46 |
| Poor riding position (e.g., Raise saddle height by 4 cm), resistance 30% | 71.6 |

As described above, the RMS calculation is applied to obtain (e.g., determine, or calculate) differences in the vertical force data between the left and right handlebars, to evaluate a riding stability of the user riding the bicycle. Referring to Table 3, a result of the baseline illustrated in FIG. 12A shows an RMS of 28.9. In some embodiments, a baseline with resistance may be configured by setting the resistance at 30% and the riding status as a normal riding position, as described with reference to FIG. 8A. A result of the baseline with resistance shows an RMS of 40.3. Compared to the result of the baseline, the RMS increases 39%. In some embodiments, a result of the first experimental riding setting illustrated in FIG. 12B shows an RMS of 46. Compared to the result of the baseline, the RMS increases 59%. In some embodiments, a result of the second experimental riding setting illustrated in FIG. 12C shows an RMS of 71.6. Compared to the result of the baseline, the RMS increases 147%. These experimental results show that when the resistance is increased or the saddle height is raised, the RMS is increased. Accordingly, the system 100 can be configured to evaluate the riding stability of the user by obtaining differences in vertical force data (e.g., ratio) between left and right sides, for example, by using the baseline as a reference.

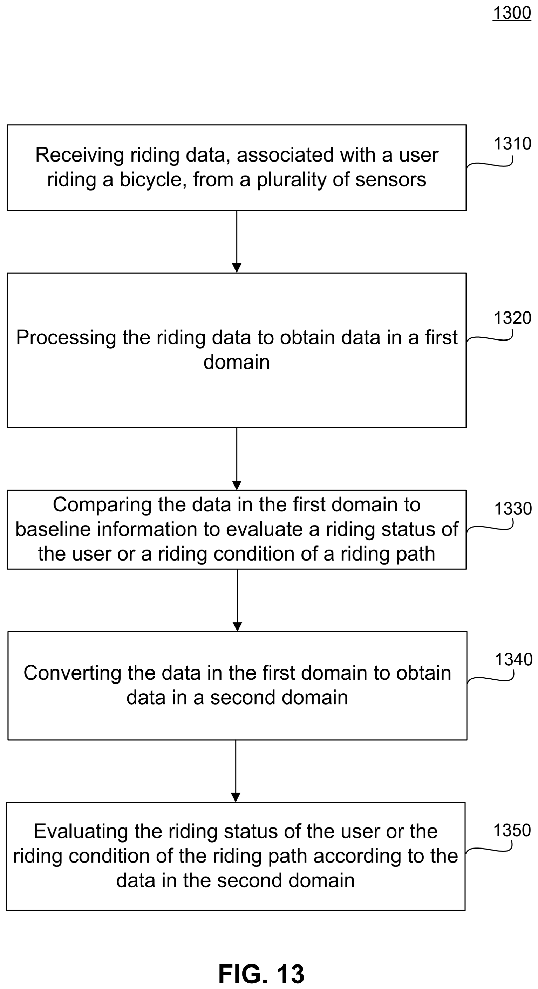

FIG. 13 is a flowchart illustrating an example method 1300 performed by the system 100 of FIG. 1, according to some embodiments of the present disclosure. Before or when a user starts cycling, the system 100 can be configured to perform steps 1310-1350 of the method 1300 and other steps for evaluating cycling activities as described herein. In step 1310, the system 100 receives riding data, associated with the user riding a bicycle, from a plurality of sensors. In some embodiments, the plurality of sensors are set on a right handlebar and a left handlebar of the bicycle. In some embodiments, the system 100 is configured to receive biological data (e.g., signals) associated with the user riding the bicycle. In such embodiments, the biological data is obtained (e.g., received, or detected) from other sensors located on the bicycle or a wearable device of the user. The other sensors may include heart rate sensor(s), electromyography (EMG) sensor(s), respiratory sensor(s), or any combination thereof, but the present disclosure is not limited thereto. The heart rate sensor(s) and the EMG sensor(s) are configured to detect a heart rate and an EMG amplitude of the user during cycling. The respiratory sensor(s) is configured to detect an oxygen intake or a respiration rate of the user during cycling. In some embodiments, the respiratory sensor(s) is further configured to identify the user's workout state during cycling. For example, the respiratory sensor(s) is used to indicate whether the user's respiration is aerobic or anaerobic.

In step 1320, the system 100 processes the riding data to obtain data in a first domain. In some embodiments, the first domain is a time domain. In step 1330, the system 100 compares the data in the first domain to baseline information to evaluate a riding status of the user or a riding condition of a riding path. In some embodiments, the baseline information (for example, the baseline as described with reference to FIGs. 8A-8B) is generated according to a plurality of indoor cycling activities that simulate a plurality of outdoor scenarios of cycling activities (for example, the experiments as described with reference to FIGs. 8A-8B). In step 1340, the system 100 converts the data in the first domain to obtain data in a second domain. In some embodiments, the second domain includes at least one of a frequency domain, a time-frequency domain, or a rate-scale (RS) domain. In some embodiments, the system 100 is configured to perform signal processing by converting the obtained (e.g., sensed, measured, or detected) riding data from the first domain to the second domain. In step 1350, the system 100 evaluates the riding status of the user or the riding condition of the riding path according to the data in the second domain.

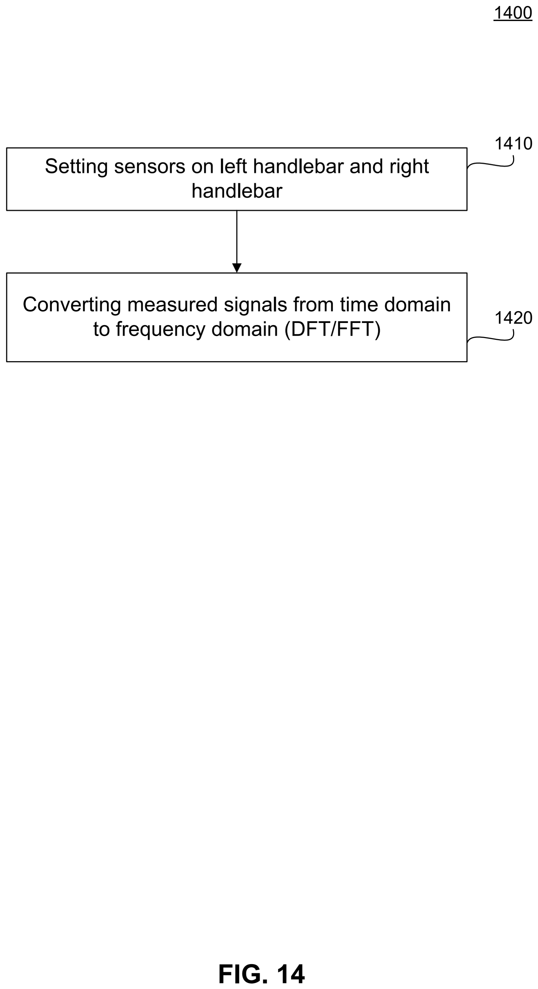

FIG. 14 is a flowchart illustrating an example method 1400 performed by the system of FIG. 1, according to some embodiments of the present disclosure. Before or when a user starts cycling, the system 100 may be configured to perform steps 1410-1420 of the method 1400 and other steps for evaluating cycling activities as described herein.

In step 1410, the system 100 sets sensors on a left handlebar and a right handlebar. For example, the system 100 is configured to set (e.g., locate or attach) the sensors, for example, strain gauges, on the left handlebar and the right handlebar of a bicycle, before the user rides the bicycle. In some embodiments, the operations of setting the sensors are described above with reference to FIG. 2.

In step 1420, the system 100 converts the riding data or signals from time domain to frequency domain. In some embodiments, the system 100 is configured to convert the obtained (e.g., sensed, measured, or detected) riding data from the time domain to the frequency domain by using, for example, a Discrete Fourier Transform (DFT) or a Fast Fourier Transform (FFT). In some embodiments, the system 100 is configured to obtain (e.g., determine or calculate) a main frequency value and a secondary frequency value, and obtain a frequency difference between the main frequency value and the secondary frequency value. In some embodiments, the system 100 is further configured to multiply the main frequency value by 60, to obtain an estimated cadence. According to the method 1400, the system 100 obtains the estimated cadence without using cadence sensors.

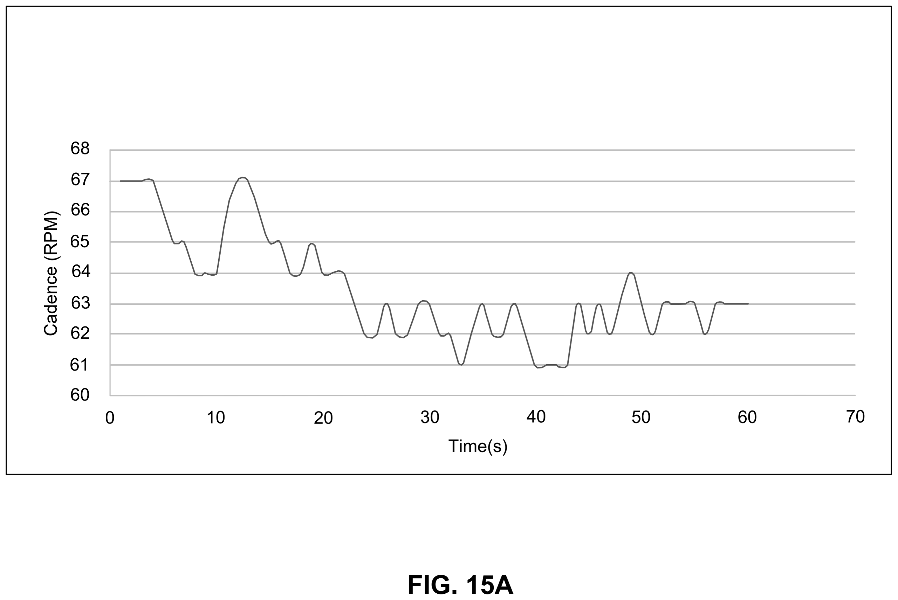

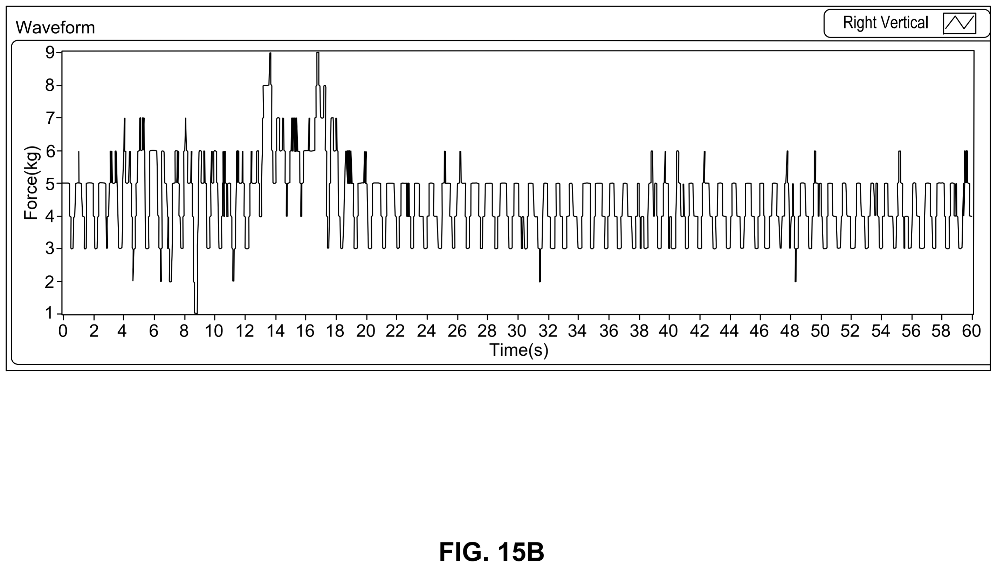

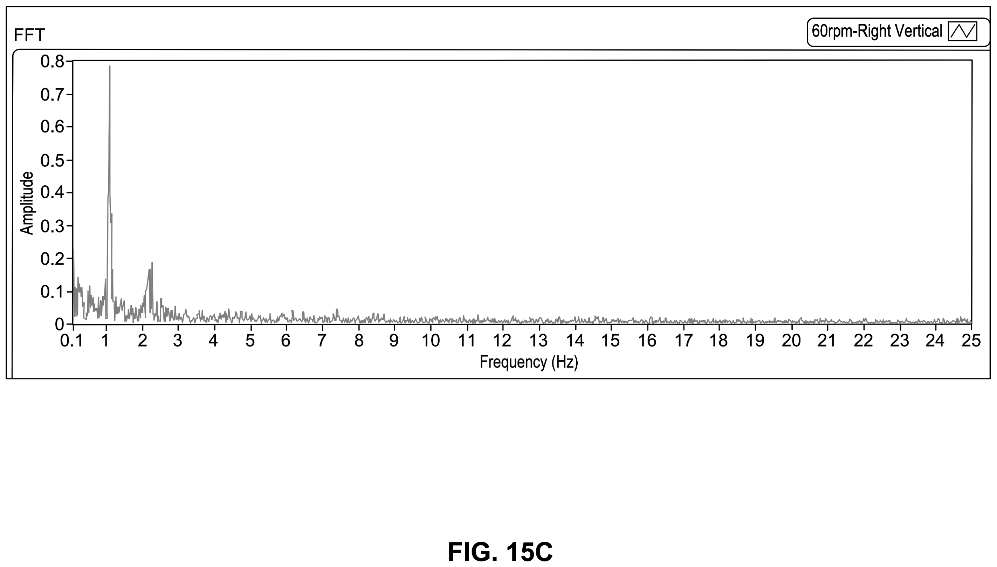

FIG. 15A is a schematic diagram illustrating example cadence data during a time period obtained by the system 100 of FIG. 1, according to some embodiments of the present disclosure. As shown in FIG. 15A, the horizontal axis represents time in seconds (s) and the vertical axis represents cadence (e.g., pedaling frequency) in rpm. In some embodiments, the system 100 is configured to set (e.g., locate or attach) sensors, for experimental and illustrative purposes, e.g., cadence sensors, on a bicycle. During a cycling activity of a user, the cadence sensors may obtain a cadence as an average 63.5 rpm during a corresponding 60-second period. For example, the cadence sensors obtain or retrieve 60 seconds of stable riding data from riding data during the cycling activity period of the user longer than 60 seconds, which is used as a basis for averaging. Accordingly, an accurate (e.g., actual) cadence (e.g., average cadence) is obtained as 63.5 rpm by using the cadence sensors. It is noted that, FIG. 15A illustrates cadence data obtained using a cadence sensor, which serves as a reference for comparison with estimated cadence data obtained by using a sensor configuration as described with reference to following FIGs. 15B and 15C.

FIG. 15B is a schematic diagram illustrating example vertical force data during a time period obtained by the system 100 of FIG. 1, according to some embodiments of the present disclosure. As shown in FIG. 15B, the horizontal axis represents time in seconds (s) and the vertical axis represents force in kilograms (kg). In some embodiments, the system 100 is configured to set (e.g., locate or attach) sensors, for example, strain gauges, on a left handlebar and a right handlebar of a bicycle. In some embodiments, the operations of setting the sensors are described above with reference to FIG. 2. During the cycling activity of a user riding the bicycle, the system 100, for example, the sensors on the handlebars of the bicycle, is configured to obtain (e.g., sense, measure, or detect) a right side of the vertical force data of the user during a 60-second period (e.g., obtain or retrieve 60 seconds of stable riding data from riding data during the cycling activity period of the user longer than 60 seconds). The system 100 is further configured to perform signal processing on the obtained (e.g., sensed, measured, or detected) vertical force data to convert it from the time domain to the frequency domain.

FIG. 15C is a schematic diagram illustrating example frequency-domain vertical force data converted by the system 100 of FIG. 1, according to some embodiments of the present disclosure. As shown in FIG. 15C, the horizontal axis represents frequency in Herz (Hz) and the vertical axis represents amplitude. Correspondences between amplitude values and frequency data can be obtained. A main frequency value at 1.1 Hz and a secondary frequency value at around 2.28 Hz are shown. In some embodiments, after the system 100 converts the obtained vertical force data from the time domain to the frequency domain (as described with reference to FIG. 15B), the system 100 can be configured to obtain the main frequency value at 1.1 Hz and the secondary frequency value at around 2.28 Hz, and can be configured to determine (e.g., calculate) whether the secondary frequency value is approximately double the frequency of 1.1 Hz. In response to a determination that the secondary frequency value is approximately double the frequency of 1.1 Hz, the system 100 is further configured to multiply the main frequency value of 1.1 Hz by 60, to obtain an estimated cadence of 66 rpm without using cadence sensors. The estimated cadence of 66 rpm is close to the accurate cadence of 63.5 rpm (as described with reference to FIG. 15A). In some embodiments, the system 100 is configured to determine that the minor deviation (e.g., less than 4%) is acceptable.

Accurate cadences (obtained from the average of cadence sensors sensed data as described with reference to FIG. 15A) and estimated cadences (obtained from the conversion of handlebar sensors sensed data as described with reference to FIGs. 15B and 15C) are shown in Table 4.

| Accurate Cadences (rpm) | Estimated Cadences (rpm) |
| --- | --- |
| 63.5 | 66 |
| 84.7 | 87 |
| 102.6 | 106.2 |

Referring to Table 4, an accurate cadence of 63.5 rpm and an estimated cadence of 66 rpm are shown. It can be determined, for example, by the system 100, that the deviation between the estimated cadence of 66 rpm and the accurate cadence of 63.5 rpm is less than a predetermined threshold (e.g., 4%) and acceptable. Further referring to Table 4, accurate cadence of 84.7 rpm and 102.6 rpm and estimated cadence of 87 rpm and 106.2 rpm are shown. The deviation between the estimated cadence of 87 rpm and the accurate cadence of 84.7 rpm, and the deviation between the estimated cadence of 106.2 rpm and the accurate cadence of 102.6 rpm, are less than the predetermined threshold (e.g., 4%) and acceptable.

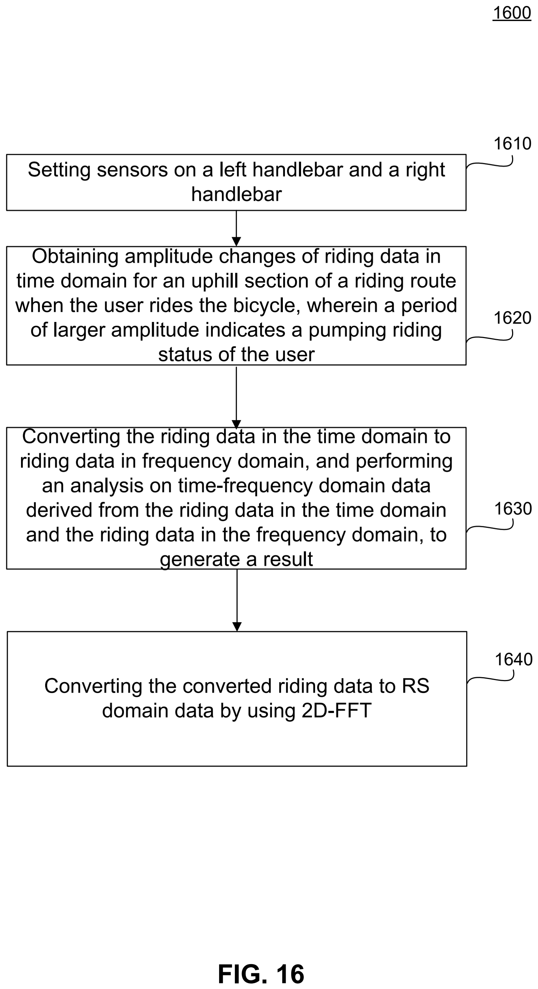

FIG. 16 is a flowchart illustrating an example method 1600 performed by the system 100 of FIG. 1, according to some embodiments of the present disclosure. Before or when a user starts cycling, the system 100 can be configured to perform steps 1610-1640 of the method 1600 and other steps for evaluating cycling activities as described herein. In step 1610, the system 100 sets sensors on a left handlebar and a right handlebar. For example, the system 100 is configured to set (e.g., locate or attach) the sensors, for example, strain gauges, on the left handlebar and the right handlebar of a bicycle, before the user rides the bicycle. In some embodiments, the operations of setting the sensors are described above with reference to FIG. 2. In step 1620, the system 100 obtains amplitude changes of riding data (or signals) in time domain for an uphill section (e.g., terrain) of a riding route when the user rides the bicycle, wherein a period of larger amplitude indicates a pumping riding status (e.g., dancing on pedals, which may refer to the user's rhythmic and powerful motion while standing up out of the saddle and pedaling) of the user. In some embodiments, the system 100 is configured to determine the pumping riding status of the user riding the bicycle according to the period of larger amplitudes. Accordingly, the system 100 is further configured to determine a riding status, a riding posture, a riding stability (or a skill), and other related riding information of the user.

In step 1630, the system 100 converts the riding data in the time domain to riding data in frequency domain, and performs an analysis on time-frequency domain (e.g., spectrum) data derived from the riding data in the time domain and the riding data in the frequency domain, to generate a result. In some embodiments, the result may include that the riding status is (for example, relatively) stable, when the analysis indicates that the time-frequency domain data includes regular harmonic frequencies. In step 1640, the system 100 converts the converted riding data to rate-scale (RS) domain data by using a Two-Dimensional (2D)-FFT. In some embodiments, the conversion includes searching for hidden information from the time-frequency analysis data. In some embodiments, searching for the hidden information includes extracting features in a specific range from the time-frequency analysis data.

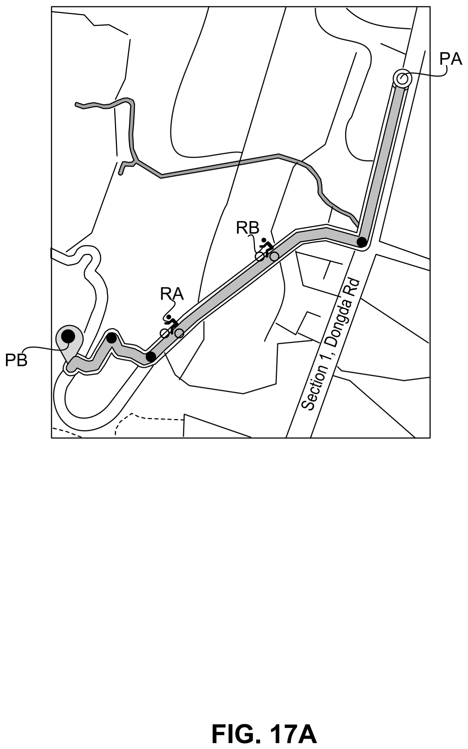

FIG. 17A is a schematic diagram illustrating an example route of an outdoor cycling scenario, according to some embodiments of the present disclosure. As shown in FIG. 17A, two riders, a rider RA and a rider RB, ride two bicycles, respectively. The rider RA has a lot of riding experience (e.g., with training experience) while the rider RB lacks riding experience (e.g., with no training experience). The two riders ride a one-way riding route, which is shown as a dark gray path from a start point PA to an end point PB. The riding route may include an uphill riding terrain, and a distance of the riding route may be approximately 1.8 kilometers (km). In some embodiments, during the cycling activities, the two riders are pump riding (i.e., riding in a standing position for a period of time) while riding on a predetermined road terrain (e.g., in the uphill riding terrain).

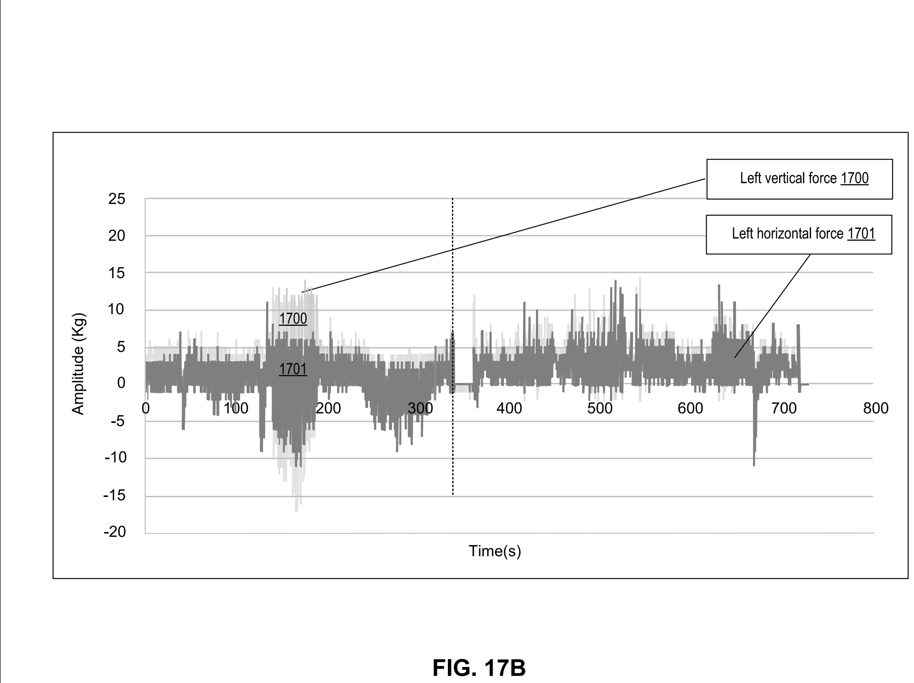

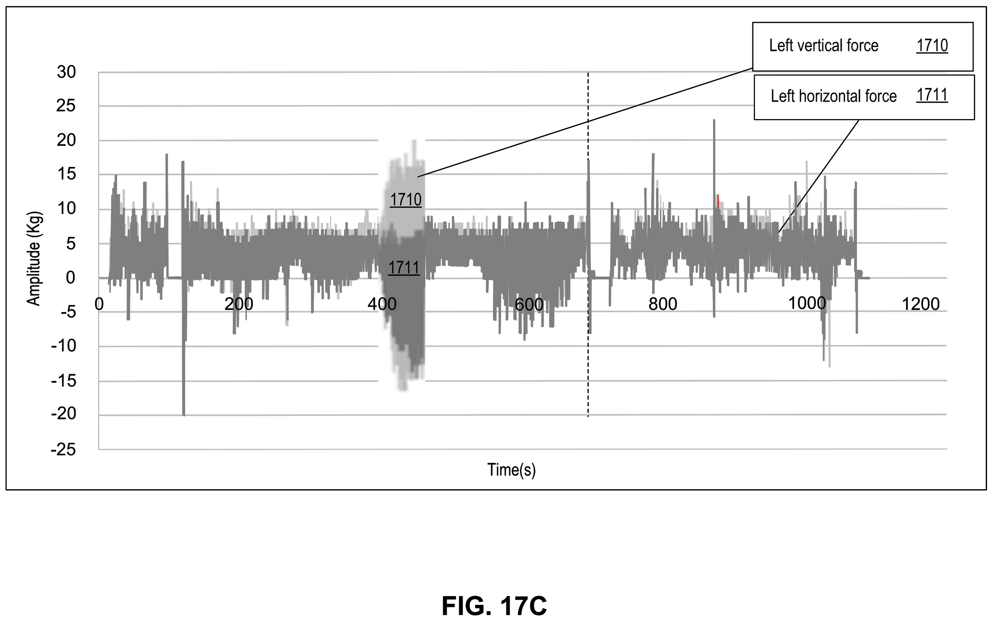

FIGs. 17B and 17C are schematic diagrams illustrating example riding data of the two riders RA and RB, respectively, in time domain obtained by the system 100 of FIG. 1, according to some embodiments of the present disclosure. As shown in FIGs. 17B and 17C, each horizontal axis represents measured force in time (s) at which force is measured and each vertical axis represents measured force amplitude in kilograms (kg). Before the two riders start cycling, the system 100 can be configured to set (e.g., locate or attach) sensors, for example, strain gauges, on a left handlebar and a right handlebar of each of the two bicycles. In some embodiments, the operations of setting the sensors are described above with reference to FIG. 2. The system 100 may be configured to obtain (e.g., sense, measure, or detect) riding data of the two riders in time domain during the two riders ride on the riding route as an illustrative example.

As shown in FIG. 17B, there is a significant difference between left vertical force 1700 (shown as light gray) and left horizontal force 1701 (shown as dark gray) at a time period between 100 to 200 seconds. The difference may come from the left vertical force being much greater than the left horizontal force. In some embodiments, the system 100 is configured to calculate the significant difference, and to determine that the time period between 100 to 200 seconds is a pumping riding time period for the rider RA in the uphill riding terrain. As shown in FIG. 17C, there is a significant difference between left vertical force 1710 (shown as light gray) and left horizontal force 1711 (shown as dark gray) at a time period between 400 to 500 seconds. The difference comes from the left vertical force being much greater than the left horizontal force. In some embodiments, the system 100 is configured to calculate the significant difference, and to determine that the time period between 400 to 500 seconds is a pumping riding time period for the rider RB in the uphill riding terrain. As shown in FIGs. 17B and 17C, it can be determined, for example, by the system 100, that the pumping riding period of the rider RB is observed or occurred later than the pumping riding period of the rider RA, and the rider RB spent more time than that of the rider RA to complete the riding route from the start point PA to the end point PB. It can also be determined, for example, by the system 100, that the forces of the rider RA are in the range of $\pm 15$ kg, and the forces of the rider RB exceed the range of $\pm 15$ kg.

In addition to determining the above rider's riding information (e.g., pumping riding period, or riding vertical force) by analyzing their riding data in time domain, additional riding information (e.g., riding posture, riding technique or skill, or riding performance) can be obtained, for example, by the system 100, by analyzing their riding data (in time domain) in another domain (e.g., frequency domain, time-frequency domain, or RS domain).

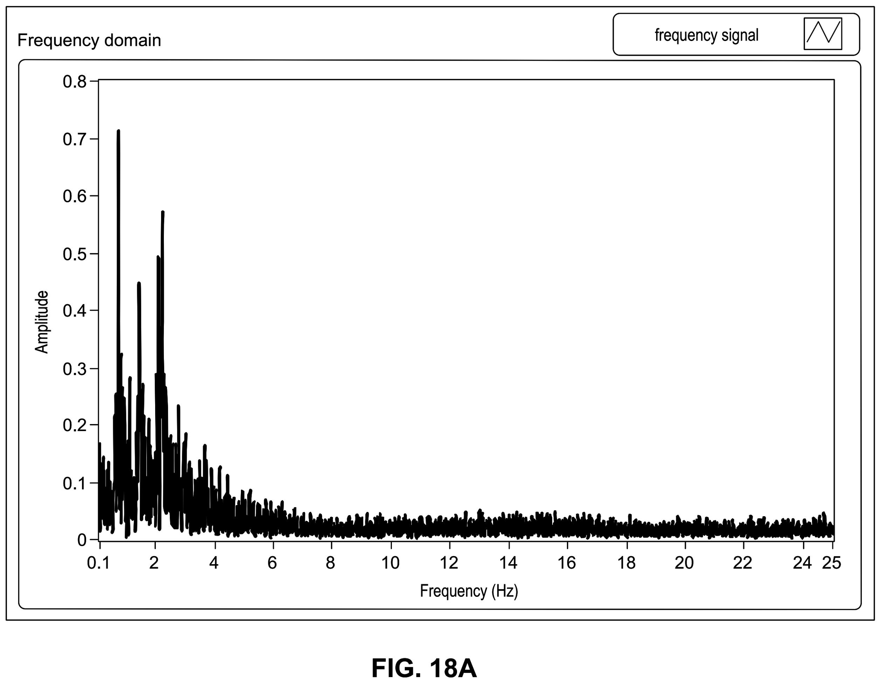

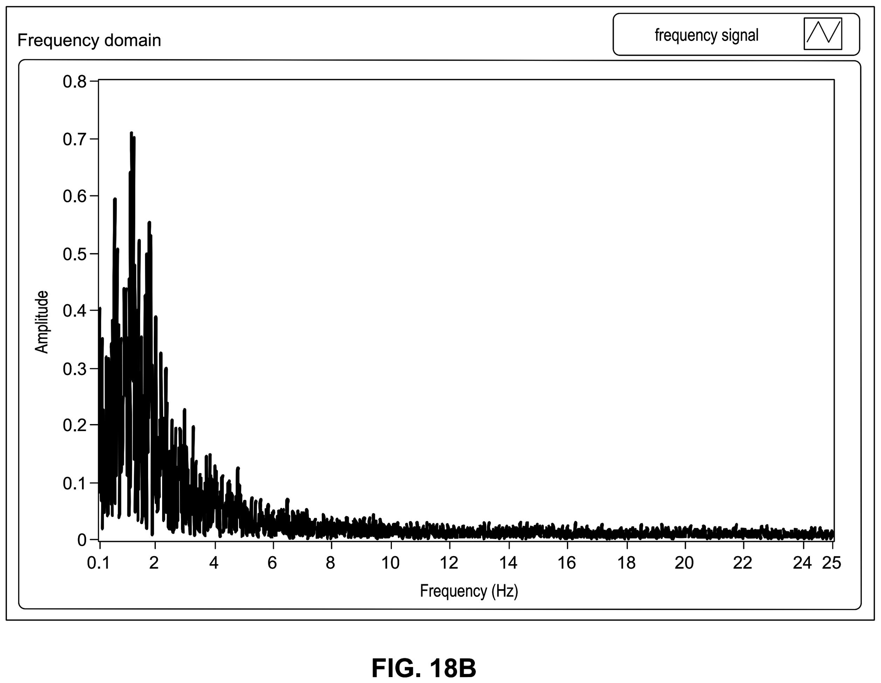

FIGs. 18A-18F are schematic diagrams illustrating example comparisons of riding data of two riders across frequency domain, time-frequency domain, and RS domain, performed by the system 100 of FIG. 1, according to some embodiments of the present disclosure. FIGs. 18A and 18B show riding data for riders RA and RB, respectively, in the frequency domain. As shown in FIGs. 18A and 18B, the horizontal axis represents frequency in Hz and the vertical axis represents force amplitude. Correspondence between force amplitude data and frequency data may be obtained. In FIG. 18A, a main frequency value at 0.8 Hz and a secondary frequency value at around 1.56 Hz are shown. In some embodiments, after the system 100 converts the riding data of the rider RA (as described with reference to FIG. 17B) from the time domain to the frequency domain, the system 100 obtains the main frequency value at 0.8 Hz and the secondary frequency value at around 1.56 Hz, and determines whether the secondary frequency value is approximately double the frequency of 0.8 Hz. In response to a determination that the secondary frequency value is approximately double the frequency of 0.8 Hz, the system 100 is further configured to multiply the main frequency value of 0.8 Hz by 60, to obtain an estimated cadence of 48 rpm without using cadence sensors. In FIG. 18B, a main frequency value is not shown clearly due to relatively unstable riding results. In some embodiments, after the system 100 converts the riding data of the rider RB (as described with reference to FIG. 17C) from the time domain to the frequency domain, the system 100 cannot obtain the main frequency value and/or the secondary frequency value, therefore cannot obtain an estimated cadence.

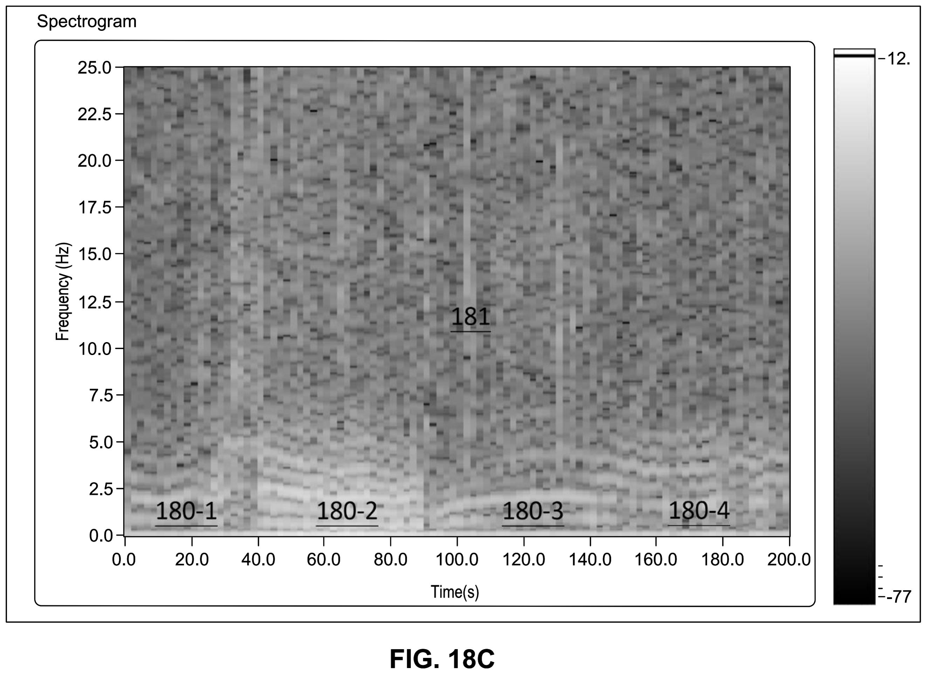

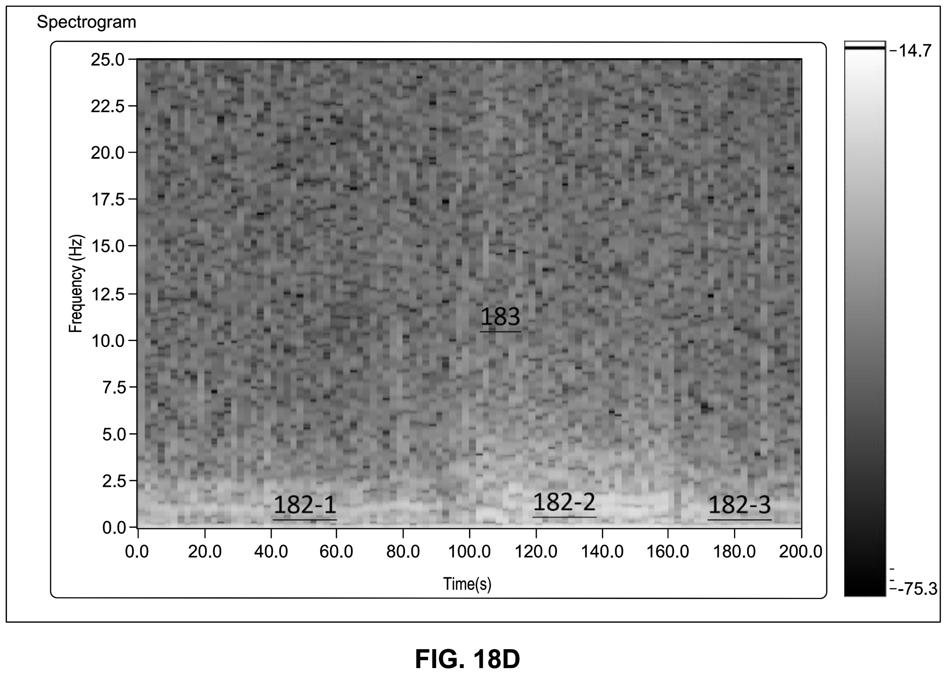

As shown in FIGs. 18C and 18D, which illustrate spectrograms of the riding data, the horizontal axis represents time in seconds (s) and the vertical axis represents frequency in Hz. Time-frequency data and correspondence between time data and frequency data are shown in FIGs. 18C and 18D for riders RA and RB, respectively. After sampling time domain data in a time range of 100.0 to 300.0 seconds (e.g., including before, under and after the pumping riding) of FIG. 17B, the system 100 is configured to apply time-frequency transformation to the sampled data, resulting in FIG. 18C. In FIG. 18C, a plurality of regular harmonic frequencies, for example, areas 180-1, 180-2, 180-3 and 180-4, located below 5 Hz within a frequency range of 0.0 to 7.5 Hz can be observed. Another non-harmonic area, for example, area 181 distributed above 7.5 Hz, is also shown. In some embodiments, after the system 100 converts the riding data of the rider RA (as described with reference to FIG. 17B) from the time domain to the time-frequency domain shown in FIG. 18C, the system 100 determines that a riding status of the rider RA riding the bicycle is (e.g., relatively) stable when the time-frequency data indicates or includes the plurality of regular harmonic frequencies, for example, the areas 180-1, 180-2, 180-3 and 180-4. By the same process, after sampling time domain data in a time range of 350.0 to 550.0 seconds (e.g., including before, under and after the pumping riding) of FIG. 17C, the system 100 is configured to apply time-frequency transformation to the sampled data, resulting in FIG. 18D. In FIG. 18D, regular harmonic frequencies cannot be observed at any frequency within the entire sampled data, while non-harmonic areas, for example, areas 182-1, 182-2, 182-3 and 183 are shown. In some embodiments, after the system 100 converts the riding data of the rider RB (as described with reference to FIG. 17C) from the time domain to the time-frequency domain shown in FIG. 18D, the system 100 determines that a riding status of the rider RB riding the bicycle is (e.g., relatively) unstable at all time points.

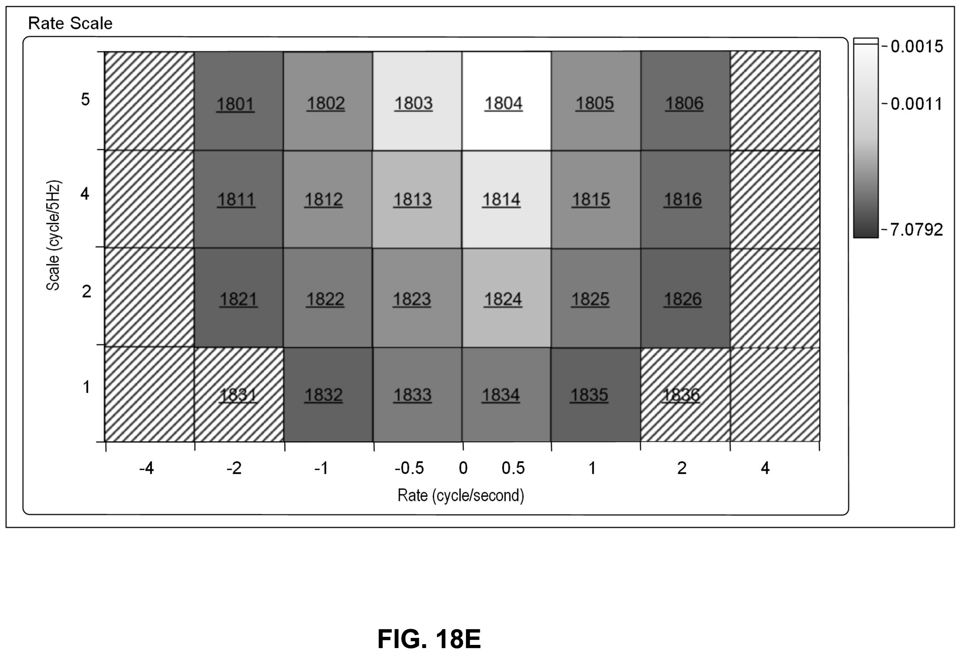

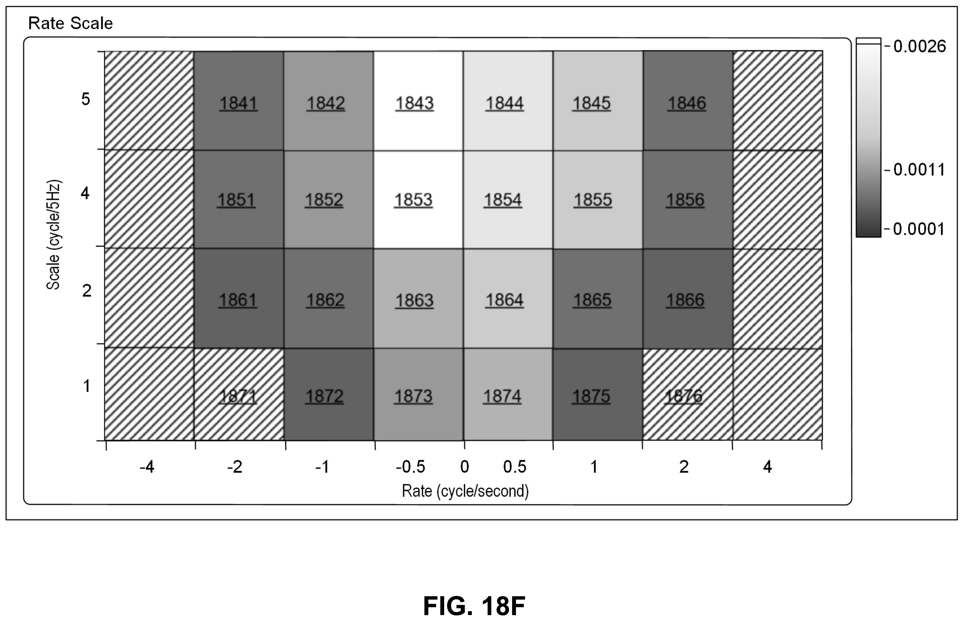

In some illustrative embodiments, the riding status and/or performance of riders RA and RB can be analyzed by transforming their respective time domain riding records as depicted in FIGs. 17B and 17C into different domains. For example, processed data may be generated for the rider RA as shown in FIGs. 18A, 18C, 18E, and processed data may be generated for the rider RB as shown in FIGs. 18B, 18D, 18F. The rider RA performs relatively stable riding performance and more experienced riding skills, as evidenced by FIGs. 18A, 18C and 18E. As observed in FIG. 17B, the rider RA rides the bicycle in an experienced manner with minimal force applied to the handlebar (e.g., less than 10 Kg, or less than 5 Kg) during most of the riding period. As shown in FIG. 18A, the rider RA pedals along the riding route from the start point PA, through the uphill riding terrain, to the end point PB with an estimated average cadence of 48 rpm (i.e., calculated without cadence sensors). Furthermore, as observed in both FIGs. 18A and 18C, the rider RA shows a rhythmic handlebar-force-applied phenomenon with appropriate cadence (e.g., estimated based on the data sensed by the force sensors 110 shown in FIG. 2). Consequently, as shown in FIG. 18C, areas 180-1, 180-2, 180-3 and 180-4 show regular harmonic frequencies that can be observed at various time periods along the riding route. From another perspective, FIG. 18E shows the relationship between RPM and pedaling power distribution for the rider RA. The Rate indicated on the horizontal axis represents cycles per second and is obtained by dividing RPM by 60 seconds. Zero serves as a reference point, and intervals of plus or minus 0.5 are used to represent cycles per second. The Scale indicated on the vertical axis represents 1 cycle multiplied by 0.2 second at various scale numbers (e.g., 1, 2, 4, and 5, as shown in FIG. 18E). For the cycling activity performed by the rider RA on the uphill riding terrain, the estimated cadence of 48 RPM falls within a low Rate range (e.g., -0.5 to 0.5) with pedaling power concentrated in areas 1803, 1804, 1813, and 1814. Specially, 48 RPM corresponds to 0.8 revolutions per second, which means 0.8 cycles per second, that is exactly 4/5 cycle time for the rider RA, which equals to 4 times per scale (i.e., 4 multiplied by 1 cycle/5Hz = 4/5 cycle time in seconds). As shown in FIG. 18E, the areas 1803, 1804, 1813, and 1814 with power ratio values ranging from -0.0015 to -0.0011 represent higher power areas, while other areas 1801, 1802, 1805, 1806, 1811, 1812, 1815, 1816, 1821-1826, and 1831-1836 with power ratio values ranging from -0.0011 to -7.0792 represent lower power areas. The areas 1803, 1804, 1813, and 1814 shows much higher power values, indicating significant concentration of pedaling power. In contrast, the other areas show much lower power values.

In contrast, the rider RB experiences relatively unstable riding conditions, as evidenced by FIGs. 18B, 18D and 18F. As observed in FIG. 17C, the rider RB rides the bicycle in an untrained status and applies excessive force on the handlebar (e.g., around more than 10 Kg, or more than 15 Kg) during most of the riding period. As shown in FIG. 18B, the rider RB pedals along the same riding route as the rider RA for comparison. As observed in FIG. 18B, no main frequency and secondary frequency values can be identified, thereby resulting in a lack of harmonic areas in FIG. 18D. This indicates the rider RB had trouble maintaining a stable pedaling rhythm while tackling the uphill riding terrain. From another perspective, FIG. 18F shows the relationship between RPM and pedaling power distribution, with axis labels corresponding to those described in FIG. 18E. As observed in FIG. 18F, areas including 1843, 1844, 1853, 1854, 1863, 1864, 1873, and 1874 within the low Rate range show power ratio values ranging from -0.0026 to -0.0011 are similar to those outside the low Rate range with power ratio values ranging from -0.011 to -0.0001, indicating no significant concentration of pedaling power.

Based on the above analysis, it is concluded that additional hidden information can be obtained, by the system through the force sensors 110 set on the bicycle with reference to FIG.2, by transforming the rider RA's riding records/data in time domain into other domains, for example, frequency domain, time-frequency domain, and RS domain. Therefore, the system can provide enhanced feedback under the specific riding condition of a riding path (e.g., uphill terrain), to assist the rider RA to improve adjusting bike fitting or enhancing riding skills.

In some embodiments, after the system 100 converts the riding data of the rider RA (as described with reference to FIG. 17B) from the time domain to the RS domain, the system 100 determines that a riding status of the rider RA is (e.g., relatively) stable when the RS domain data (as shown in FIG. 18E) indicates or includes concentricity on higher scales and lower rates (for example, as the lighter area). In some embodiments, after the system 100 converts the riding data of the rider RB (as described with reference to FIG. 17C) from the time domain to the RS domain, the system 100 determines that a riding status of the rider RB is (e.g., relatively) unstable, when the RS domain data (as shown in FIG. 18F) indicates or includes no significant concentricity.

According to some embodiments, a system for evaluating cycling activities is provided to perform the methods described above. The system includes: a memory storing a set of instructions; and one or more processors configured to execute the stored set of instructions to perform operations including: receiving riding data, associated with a user riding a bicycle, from a plurality of sensors; processing the riding data to obtain data in a first domain; comparing the data in the first domain to baseline information to evaluate a riding status of the user or a riding condition of a riding path; converting the data in the first domain to obtain data in a second domain; and evaluating the riding status of the user or the riding condition of the riding path according to the data in the second domain.

In some embodiments, the plurality of sensors are located on a right handlebar and a left handlebar of the bicycle.

In some embodiments, the operations further include: receiving biological data associated with the user riding the bicycle.

In some embodiments, the one or more processors are located on the bicycle or within a remote device.

In some embodiments, the first domain is a time domain, and the baseline information is generated according to a plurality of indoor cycling activities that simulate a plurality of outdoor scenarios of cycling activities.

In some embodiments, the second domain includes at least one of a frequency domain, a time-frequency domain, or a rate-scale (RS) domain.

In some embodiments, the operations further include: controlling a display device to display the riding status of the user or the riding condition of the riding path.

According to some embodiments, a method for evaluating cycling activities is provided to be performed in the system described above. The method includes: receiving, by one or more processors, riding data, associated with a user riding a bicycle, from a plurality of sensors; processing, by the one or more processors, the riding data to obtain data in a first domain; comparing, by the one or more processors, the data in the first domain to baseline information to evaluate a riding status of the user or a riding condition of a riding path; converting, by the one or more processors, the data in the first domain to data in a second domain; and evaluating, by the one or more processors, the riding status of the user or the riding condition of the riding path according to the data in the second domain.

In some embodiments, the plurality of sensors are located on a right handlebar and a left handlebar of the bicycle.

In some embodiments, the method further includes receiving biological data associated with the user riding the bicycle.

In some embodiments, the one or more processors are located on the bicycle or within a remote device.

In some embodiments, the first domain is a time domain, and the baseline information is generated according to a plurality of indoor cycling activities that simulate a plurality of outdoor scenarios of cycling activities.

In some embodiments, the second domain includes at least one of a frequency domain, a time-frequency domain, or a rate-scale (RS) domain.

In some embodiments, the method further includes controlling, by the one or more processors, a display device to display the riding status of the user or the riding condition of the riding path.

According to some embodiments, a non-transitory computer-readable medium stores instructions that are executable by at least one processor of a system to cause the system to perform a method for evaluating cycling activities. The method includes: receiving riding data, associated with a user riding a bicycle, from a plurality of sensors; processing the riding data to obtain data in a first domain; comparing the data in the first domain to baseline information to evaluate a riding status of the user or a riding condition of a riding path; converting the data in the first domain to data in a second domain; and evaluating the riding status of the user or the riding condition of the riding path according to the data in the second domain.

In some embodiments, the plurality of sensors are located on a right handlebar and a left handlebar of the bicycle.

In some embodiments, the method further includes: receiving biological data associated with the user riding the bicycle.

In some embodiments, the first domain is a time domain, and the baseline information is generated according to a plurality of indoor cycling activities that simulate a plurality of outdoor scenarios of cycling activities.

In some embodiments, the second domain includes at least one of a frequency domain, a time-frequency domain, or a rate-scale (RS) domain.

In some embodiments, the method further includes: controlling a display device to display the riding status of the user or the riding condition of the riding path.

According to some embodiments, a bicycle is provided to perform the methods described above. The bicycle includes: a right handlebar including one or more first sensors configured to detect a first force signal during a riding period of a user riding the bicycle on a riding path; a left handlebar including one or more second sensors configured to detect a second force signal during the riding period; and one or more processors configured to execute a set of instructions stored in a memory to perform operations including: processing the first force signal and the second force signal to obtain data in a first domain and data in a second domain, wherein the data in the first domain is associated with the user riding the bicycle during the riding period; generating baseline information according to a plurality of indoor cycling activities; comparing the data in the first domain to the baseline information to evaluate a riding status of the user or a riding condition of the riding path; and converting the data in the first domain to the data in the second domain for evaluating the riding status of the user, the riding condition of the riding path, or a combination thereof.

In some embodiments, the first domain is a time domain, and the plurality of indoor cycling activities simulate a plurality of outdoor scenarios of cycling activities.

In some embodiments, the second domain includes at least one of a frequency domain, a time-frequency domain, or a rate-scale (RS) domain.

In some embodiments, the bicycle further includes: a display device configured to display the riding status of the user or the riding condition of the riding path.

In some embodiments, the riding status of the user or the riding condition of the riding path is displayed on a mobile device associated with the user.

According to some embodiments, a remote computing device is provided to perform the methods described above. The remote computing device includes: a memory storing a set of instructions; and one or more processors configured to execute the stored set of instructions to perform operations including: receiving a first force signal and a second force signal from a bicycle; processing the first force signal and the second force signal to obtain data in a first domain and data in a second domain, wherein the data in the first domain is associated with a user riding the bicycle during a riding period; comparing the data in the first domain to baseline information to evaluate a riding status of the user or a riding condition of a riding path, wherein the baseline information is generated according to a plurality of indoor cycling activities; and converting the data in the first domain to the data in the second domain for evaluating the riding status of the user, the riding condition of the riding path, or a combination thereof.

In some embodiments, the first force signal is detected by one or more first sensors on a right handlebar of the bicycle during the riding period of the user riding the bicycle on the riding path, and the second force signal is detected by one or more second sensors on a left handlebar of the bicycle during the riding period of the user riding the bicycle on the riding path.

In some embodiments, the first domain is a time domain, and the plurality of indoor cycling activities simulate a plurality of outdoor scenarios of cycling activities.

In some embodiments, the second domain includes at least one of a frequency domain, a time-frequency domain, or a rate-scale (RS) domain.

In some embodiments, the remote computing device further includes: a display device configured to display the riding status of the user or the riding condition of the riding path.

In some embodiments, the riding status of the user or the riding condition of the riding path is displayed on a mobile device associated with the user.

A person of ordinary skill in the art can understand that all or some of the steps of various methods in the foregoing embodiments may be implemented by a program instructing related hardware of a processing device. The program can be stored in a computer-readable storage medium. The computer-readable storage medium may include: a flash drive, a read-only memory (ROM), a random access memory (RAM), a magnetic disk, an optical disc, or the like.

The embodiments of the present disclosure further provide a computer-readable medium. Optionally, in some embodiments, the above-mentioned computer-readable medium can be configured to store the instructions and executable by at least one processor of a system to cause the system to perform a method for evaluating cycling activities in the foregoing embodiments.

In some embodiments, there is a computer program comprising computer program instructions that when executed by one or more processors cause the one or more processors to perform a method as described substantially herein.

In some embodiments, the one or more processors can be configured to perform operations/functions by executing instructions stored in the memory. The one or more processors may be integrated into one processing unit, or may be physically separated.

The memory can be configured to store software programs, such as program instructions corresponding to the methods in the above embodiments of the present disclosure. The one or more processors execute various function applications and data processing by running the software programs stored in the memory, that is, implement the above-mentioned methods. The memory may include a high-speed RAM, and may also include a non-volatile memory, for example, one or more magnetic storing devices, a flash memory, or other nonvolatile solid-state memories. The one or more processors can call the information and application programs stored in memory to perform the operations of the above methods according to the foregoing embodiments.

As used herein, the term "or" encompasses all possible combinations, except where infeasible. For example, if it is stated that a device, structure, or module may include A or B, then, unless specifically stated otherwise or infeasible, the device, structure, or module may include A, or B, or A and B. As a second example, if it is stated that a device, structure, or module may include A, B, or C, then, unless specifically stated otherwise or infeasible, it may include A, or B, or C, or A and B, or A and C, or B and C, or A and B and C.

It will be apparent to those skilled in the art that various modifications and variations can be made to the disclosed methods or devices. Additionally, it is also possible to combine features or components from different embodiments of the present disclosure based on practical needs. Other embodiments will be apparent to those skilled in the art from consideration of the specification and practice of the disclosed device and related methods and operations.

**Claims**

1. A system for evaluating cycling activities, comprising:

   a memory storing a set of instructions; and
   one or more processors configured to execute the stored set of instructions to perform operations comprising:

      receiving riding data, associated with a user riding a bicycle, from a plurality of sensors;
      processing the riding data to obtain data in a first domain;
      comparing the data in the first domain to baseline information to evaluate a riding status of the user or a riding condition of a riding path;

converting the data in the first domain to obtain data in a second domain; and
evaluating the riding status of the user or the riding condition of the riding path according to the data in the second domain.

2.  The system according to claim 1, wherein the plurality of sensors are located on a right handlebar and a left handlebar of the bicycle.

3.  The system according to claim 1 or 2, the operations further comprising:
receiving biological data associated with the user riding the bicycle.

4.  The system according to any preceding claim, wherein the one or more processors are located on the bicycle or within a remote device.

5.  The system according to any preceding claim, wherein:

the first domain is a time domain, and the baseline information is generated according to a plurality of indoor cycling activities that simulate a plurality of outdoor scenarios of cycling activities; and/or
the second domain comprises at least one of a frequency domain, a time-frequency domain, or a rate-scale (RS) domain.

6.  The system according to any preceding claim, the operations further comprising:
controlling a display device to display the riding status of the user or the riding condition of the riding path.

7.  A method for evaluating cycling activities, comprising:

receiving, by one or more processors, riding data, associated with a user riding a bicycle, from a plurality of sensors;
processing, by the one or more processors, the riding data to obtain data in a first domain;
comparing, by the one or more processors, the data in the first domain to baseline information to evaluate a riding status of the user or a riding condition of a riding path;
converting, by the one or more processors, the data in the first domain to data in a second domain; and
evaluating, by the one or more processors, the riding status of the user or the riding condition of the riding path according to the data in the second domain.

8.  The method according to claim 7, wherein the plurality of sensors are located on a right handlebar and a left handlebar of the bicycle.

9.  The method according to claim 7 or 8, further comprising:
receiving biological data associated with the user riding the bicycle.

10. The method according to any one of claims 7 to 9, wherein the one or more processors are located on the bicycle or within a remote device.

11. The method according to any one of claims 7 to 10, wherein:

the first domain is a time domain, and the baseline information is generated according to a plurality of indoor cycling activities that simulate a plurality of outdoor scenarios of cycling activities; and/or
wherein the second domain comprises at least one of a frequency domain, a time-frequency domain, or a rate-scale (RS) domain.

12. The method according to any one of claims 7 to 11, further comprising:
controlling, by the one or more processors, a display device to display the riding status of the user or the riding condition of the riding path.

13. A computer program comprising computer program instructions that when executed by one or more processors cause the one or more processors to perform a method according to any one of claims 7 to 12.

14. A bicycle, comprising:

a right handlebar comprising one or more first sensors configured to detect a first force signal during a riding period of a user riding the bicycle on a riding path;

a left handlebar comprising one or more second sensors configured to detect a second force signal during the riding period; and

one or more processors configured to execute a set of instructions stored in a memory to perform operations comprising:

processing the first force signal and the second force signal to obtain data in a first domain and data in a second domain, wherein the data in the first domain is associated with the user riding the bicycle during the riding period;

generating baseline information according to a plurality of indoor cycling activities;

comparing the data in the first domain to the baseline information to evaluate a riding status of the user or a riding condition of the riding path; and

converting the data in the first domain to the data in the second domain for evaluating the riding status of the user, the riding condition of the riding path, or a combination thereof.

15. A remote computing device, comprising:

a memory storing a set of instructions; and

one or more processors configured to execute the stored set of instructions to perform operations comprising:

receiving a first force signal and a second force signal from a bicycle;

processing the first force signal and the second force signal to obtain data in a first domain and data in a second domain, wherein the data in the first domain is associated with a user riding the bicycle during a riding period;

comparing the data in the first domain to baseline information to evaluate a riding status of the user or a riding condition of a riding path, wherein the baseline information is generated according to a plurality of indoor cycling activities; and

converting the data in the first domain to the data in the second domain for evaluating the riding status of the user, the riding condition of the riding path, or a combination thereof.

16. The remote computing device according to claim 15, wherein the first force signal is detected by one or more first sensors on a right handlebar of the bicycle during the riding period of the user riding the bicycle on the riding path, and the second force signal is detected by one or more second sensors on a left handlebar of the bicycle during the riding period of the user riding the bicycle on the riding path.

17. The remote computing device according to any of claims 15-16, wherein the first domain is a time domain, and the plurality of indoor cycling activities simulate a plurality of outdoor scenarios of cycling activities.

18. The remote computing device according to any of claims 15-17, wherein the second domain comprises at least one of a frequency domain, a time-frequency domain, or a rate-scale (RS) domain.

19. The remote computing device according to any of claims 15-18, further comprising:
a display device configured to display the riding status of the user or the riding condition of the riding path.

20. The remote computing device according to any of claims 15-19, wherein the riding status of the user or the riding condition of the riding path is displayed on a mobile device associated with the user.

100

| Sensor(s) 110 | ← → | Processing Device 120 | ← → | Display Device 130 |

# FIG. 1

**FIG. 2**

Processing Device 120

Interface
126

Processor(s)
122

Memory
124

**FIG. 3**

FIG. 4

500

```
┌─────────────────────────────────────────────────┐
│  Setting sensors on a left handlebar and a      │ ─ 510
│  right handlebar                                 │
└─────────────────────────────────────────────────┘
                        │
                        ▼
┌─────────────────────────────────────────────────┐
│  Measuring forces and gather data according     │ ─ 520
│  to the set sensors, to build up a mapping table │
└─────────────────────────────────────────────────┘
                        │
                        ▼
┌─────────────────────────────────────────────────┐
│  Building a transformation function according   │ ─ 530
│  to the mapping table                            │
└─────────────────────────────────────────────────┘
                        │
                        ▼
┌─────────────────────────────────────────────────┐
│  Sensing horizontal forces, vertical forces,    │ ─ 540
│  and resultant forces of the handlebars         │
└─────────────────────────────────────────────────┘
```

**FIG. 5**

600

| Receiving, from a plurality of sensors located on a left handlebar and a right handlebar, riding data of a user riding a bicycle on a riding path to provide information of the riding data, wherein the information is generated according to the riding data received from one or both of the left handlebar and the right handlebar | 610 |

| Comparing the generated information to baseline information, to evaluate at least one of a riding status of the user or a riding condition of the riding path, wherein the baseline information is generated according to a plurality of indoor cycling activities | 620 |

**FIG. 6**

700

Setting sensors on a left handlebar and a right handlebar — 710

Measuring bilateral time-domain riding data — 720

Processing unilateral time-domain riding data by using a low-pass filter for filtering high frequency noises, to observe distribution of peak-value in time axis — 730

**FIG. 7**

EP 4 738 317 A1

**FIG. 8A**

| Result |
|---|
| RideLinkData_Normal riding position_riding with standard body posture.CSV |
| RideLinkData_Normal riding position_riding with lower body posture.CSV |
| RideLinkData_Normal riding position_riding with upright upper body.CSV |
| RideLinkData_Normal riding position_riding with standard body posture, resistance 40%.CSV |
| RideLinkData_Poor riding position_riding with standard body posture.CSV |
| RideLinkData_Poor riding position_riding with standard body posture, resistance 40%.CSV |

Base Line

**FIG. 8B**

**FIG. 9A**

Time domain_filter

Time signal

high cutoff freq: fh
10.00

low cutoff freq: fl
10.0000

order
2

filter type
Lowpass

Force(N)

120
110
100
90
80
70
60
50

0.1 0.5 1 1.5 2 2.5 3 3.5 4 4.5 5 5.5 6 6.5 7 7.5 8 8.5 9 9.5 10

Time(s)

**FIG. 9B**

29

**FIG. 9C**

EP 4 738 317 A1

FIG. 9D

**FIG. 10A**

**FIG. 10B**

**FIG. 10C**

**FIG. 10D**

EP 4 738 317 A1

<u>1100</u>

```
┌─────────────────────────────────────────────────┐
│ Setting sensors on a left handlebar and a right  │ ── 1110
│                  handlebar                       │
└─────────────────────────────────────────────────┘
                        │
                        ▼
┌─────────────────────────────────────────────────┐
│        Measuring bilateral time-domain data      │ ── 1120
└─────────────────────────────────────────────────┘
                        │
                        ▼
┌─────────────────────────────────────────────────┐
│ Calculating difference between the bilateral     │ ── 1130
│ time-domain riding data, and obtaining a RMS     │
│           value of the difference                │
└─────────────────────────────────────────────────┘
```

**FIG. 11**

**FIG. 12A**

EP 4 738 317 A1

**FIG. 12B**

EP 4 738 317 A1

**FIG. 12C**

EP 4 738 317 A1

FIG. 12D

EP 4 738 317 A1

FIG. 12E

EP 4 738 317 A1

1300

| Receiving riding data, associated with a user riding a bicycle, from a plurality of sensors | 1310 |

| Processing the riding data to obtain data in a first domain | 1320 |

| Comparing the data in the first domain to baseline information to evaluate a riding status of the user or a riding condition of a riding path | 1330 |

| Converting the data in the first domain to obtain data in a second domain | 1340 |

| Evaluating the riding status of the user or the riding condition of the riding path according to the data in the second domain | 1350 |

**FIG. 13**

1400

1410

Setting sensors on left handlebar and right handlebar

Converting measured signals from time domain to frequency domain (DFT/FFT)

1420

**FIG. 14**

**FIG. 15A**

**FIG. 15B**

EP 4 738 317 A1

**FIG. 15C**

1600

1610

Setting sensors on a left handlebar and a right handlebar

Obtaining amplitude changes of riding data in time domain for an uphill section of a riding route when the user rides the bicycle, wherein a period of larger amplitude indicates a pumping riding status of the user

1620

Converting the riding data in the time domain to riding data in frequency domain, and performing an analysis on time-frequency domain data derived from the riding data in the time domain and the riding data in the frequency domain, to generate a result

1630

Converting the converted riding data to RS domain data by using 2D-FFT

1640

**FIG. 16**

**FIG. 17A**

**FIG. 17B**

**FIG. 17C**

Frequency domain

frequency signal

Amplitude

Frequency (Hz)

**FIG. 18A**

**FIG. 18B**

EP 4 738 317 A1

**FIG. 18C**

FIG. 18D

**FIG. 18E**

**FIG. 18F**

# EUROPEAN SEARCH REPORT

**Application Number**

EP 25 21 1553

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/308523 A1 (CHANG YA-HAN [TW] ET AL) 7 October 2021 (2021-10-07) <br> * paragraphs [0005] - [0007] * <br> * paragraphs [0020] - [0043] * <br> ----- | 1-20 | INV. <br> G09B19/00 <br> B62J45/422 |
| X | US 2021/396614 A1 (CHIANG MENG-HUA [TW] ET AL) 23 December 2021 (2021-12-23) | 14 | ADD. <br> B62K21/12 |
| A | * paragraphs [0002] - [0006] * <br> * paragraphs [0020] - [0029] * <br> ----- | 1-13, 15-20 | |
| A | US 2019/127020 A1 (SHAHANA SATOSHI [JP]) 2 May 2019 (2019-05-02) <br> * paragraphs [0019] - [0020] * <br> * paragraph [0046] * <br> * paragraphs [0059] - [0060] * <br> * paragraph [0096] * <br> ----- | 14 | |
| A | US 2015/367176 A1 (BEJESTAN AMIR BAHADOR FARJADIAN [US] ET AL) 24 December 2015 (2015-12-24) <br> * paragraphs [0035] - [0045] * <br> * paragraphs [0062] - [0068] * <br> * paragraph [0100] * <br> ----- | 14 | **TECHNICAL FIELDS SEARCHED (IPC)** <br><br> G09B <br> B62K <br> B62J <br> A63B <br> B62H |

The present search report has been drawn up for all claims

| Place of search | Date of completion of the search | Examiner |
|---|---|---|
| Munich | 13 March 2026 | Giemsa, Falk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 1553

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2026

| Patent document cited in search report | | | Publication date | Patent family member(s) | | Publication date |
|---|---|---|---|---|---|---|
| US 2021308523 | A1 | | 07-10-2021 | AU | 2021202003 A1 | 21-10-2021 |
| | | | | CN | 113492942 A | 12-10-2021 |
| | | | | EP | 3889020 A1 | 06-10-2021 |
| | | | | JP | 7369159 B2 | 25-10-2023 |
| | | | | JP | 2021163497 A | 11-10-2021 |
| | | | | TW | 202204202 A | 01-02-2022 |
| | | | | US | 2021308523 A1 | 07-10-2021 |
| US 2021396614 | A1 | | 23-12-2021 | NONE | | |
| US 2019127020 | A1 | | 02-05-2019 | CN | 109720496 A | 07-05-2019 |
| | | | | CN | 113184104 A | 30-07-2021 |
| | | | | CN | 113602411 A | 05-11-2021 |
| | | | | DE | 102018218167 A1 | 02-05-2019 |
| | | | | JP | 7343266 B2 | 12-09-2023 |
| | | | | JP | 2019081397 A | 30-05-2019 |
| | | | | TW | 201922559 A | 16-06-2019 |
| | | | | TW | 202225023 A | 01-07-2022 |
| | | | | US | 2019127020 A1 | 02-05-2019 |
| US 2015367176 | A1 | | 24-12-2015 | EP | 2983972 A1 | 17-02-2016 |
| | | | | US | 2015367176 A1 | 24-12-2015 |
| | | | | WO | 2014124126 A1 | 14-08-2014 |

## REFERENCES CITED IN THE DESCRIPTION

**Patent documents cited in the description**

- US 63713652 A
- US 35835225